(19) Europäisches Patentamt
European Patent Office
Office européen des brevets

(11) EP 3 526 269 B1

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(21) Anmeldenummer: **17791598.0**

(22) Anmeldetag: **10.10.2017**

(51) Int Cl.:
*C08G 18/76* (2006.01) *C08G 18/79* (2006.01)
*C08G 18/24* (2006.01) *C08G 18/44* (2006.01)
*C08G 64/34* (2006.01) *C08G 18/10* (2006.01)
*C08G 18/82* (2006.01) *C08J 3/24* (2006.01)

(86) Internationale Anmeldenummer:
**PCT/EP2017/075860**

(87) Internationale Veröffentlichungsnummer:
**WO 2018/069350 (19.04.2018 Gazette 2018/16)**

(54) **VERFAHREN ZUR HERSTELLUNG EINES MEHRFACHBINDUNGEN ENTHALTENDEN PRÄPOLYMERS ALS ELASTOMER-VORSTUFE**

METHOD FOR PRODUCING A PREPOLYMER CONTAINING MULTIPLE BONDS AS ELASTOMER PRESTAGE

PROCÉDÉ DE FABRICATION D’UN PRÉPOLYMÈRE CONTENANT PLUSIEURS LIAISONS EN TANT QUE PRÉCURSEUR D’ÉLASTOMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.10.2016 EP 16193568**

(43) Veröffentlichungstag der Anmeldung:
**21.08.2019 Patentblatt 2019/34**

(73) Patentinhaber: **Covestro Deutschland AG**
**51373 Leverkusen (DE)**

(72) Erfinder:
- **SUBHANI, Muhammad, Afzal**
  **52066 Aachen (DE)**
- **KOEHLER, Burkhard**
  **34289 Zierenberg (DE)**
- **LEITNER, Walter**
  **52074 Aachen (DE)**
- **MÜLLER, Thomas, Ernst**
  **52074 Aachen (DE)**
- **GÜRTLER, Christoph**
  **50735 Köln (DE)**

(74) Vertreter: **Levpat**
**c/o Covestro AG**
**Gebäude 4825**
**51365 Leverkusen (DE)**

(56) Entgegenhaltungen:
**WO-A1-2016/046110** **WO-A2-2014/060329**
**US-A1- 2015 232 606**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung einer Kohlenstoff-Kohlenstoff Mehrfachbindungen enthaltenden Präpolymers, wobei eine Polyolkomponente A) mit einer Isocyanatgruppen-haltigen Komponente B) umgesetzt wird und die Polyolkomponente ein Kohlenstoff-Kohlenstoff Mehrfachbindungen enthaltendes Polyethercarbonatpolyol umfasst.

Polyurethan-Elastomere wurden vor über 60 Jahren basierend auf 1,5-Naphthalindiisocyanat (NDI; z.B. Desmodur® 15 der Fa. Covestro AG), einem langkettigen Polyesterpolyol und einem kurzkettigen Alkandiol unter dem Handelsnamen Vulkollan® der Fa. CovestroAG kommerzialisiert. Vulkollane® zeichnen sich hierbei dadurch aus, dass sie neben exzellenten mechanisch-dynamischen Eigenschaften auch hervorragend bezüglich des Dauergebrauchsverhaltens verglichen mit vielen anderen Werkstoffen abschneiden. Auch das Quellungsverhalten in vielen organischen Lösungsmitteln liegt auf einem bemerkenswert günstigen Niveau.

Als langkettige Polyole kommen bisher neben Polyesterpolyolen auch Polyetherpolyole, Polycarbonatpolyole und Polyetheresterpolyole zum Einsatz. Die Wahl des langkettigen Polyols richtet sich hauptsächlich nach den Erfordernissen der jeweiligen Anwendung. Man spricht in diesem Zusammenhang auch von "maßgeschneiderten Eigenschaften". So werden zum Beispiel Polyetherpolyole verwendet, wenn Hydrolysestabilität und Tieftemperatureigenschaften im Vordergrund stehen. Für Polyesterpolyole ergeben sich bezüglich der mechanischen Eigenschaften und UV-Stabilität gegenüber Polyetherpolyolen Vorteile. Nachteilig ist jedoch beispielsweise die geringe Mikrobenbeständigkeit. Polycarbonatpolyole kombinieren in gewisser Weise die Vorteile von Polyether- und Polyesterpolyolen. Die Vorteile der Polycarbonatpolyole liegen insbesondere in ihrer UV-Stabilität, Hydrolysestabilität insbesondere unter sauren Bedingungen und ihren mechanischen Eigenschaften.

Nachteilig an Polyester- und Polycarbonatpolyolen sowie an ihren Mischtypen, den Polyestercarbonatpolyolen, gegenüber den Polyetherpolyolen ist deren meist weniger vorteilhaftes Tieftemperaturverhalten. Dies ist strukturell bedingt und rührt von der erhöhten Polarität der Carbonylgruppen her, die normalerweise dazu führt, dass Polyester- und Polycarbonatpolyole teilkristallin sind, wohingegen Polyetherpolyole, insbesondere die Propylenoxid basierten Typen als kommerziell größte Gruppe, amorph sind.

Der Bereich der Gebrauchstemperatur wird nach oben hin durch das thermische Verhalten der Hartsegmente (z.B. Urethan-, Harnstoff-, Isocyanurat-Gruppen etc.), d.h. der Strukturelemente, die in den Polyisocyanatbausteinen vorliegen, begrenzt.

Eine weitere Stoffklasse von Polyolen, welche grundsätzlich für die Herstellung von Polyurethan-Elastomeren in Frage kommen, sind Polyethercarbonatpolyole. Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

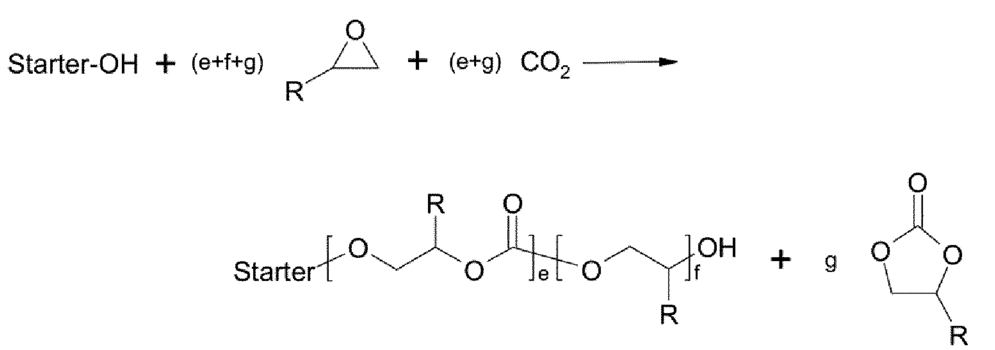

(I)

EP 2 845 872 A1 offenbart ein Verfahren zur Herstellung von Polyethercarbonatpolyolen mit Seitenketten umfassend die Schritte: (a) Vorlegen eines Katalysators und: (αα) eines Suspensionsmittels, das keine H-funktionellen

Gruppen enthält und/oder (aß) einer H-funktionellen Starterverbindung; (γ) Zudosieren von Kohlendioxid und mindestens zweier Alkylenoxide, wobei diese Alkylenoxide von dem im Schritt (β) zudosierten Alkylenoxid oder zudosierten Alkylenoxiden gleich oder verschieden sein können, wobei die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist und wobei weiterhin für den Fall, dass in Schritt (α) keine H-funktionelle Starterverbindung vorgelegt wurde, Schritt (γ) das Zudosieren einer H-funktionellen Starterverbindung umfasst. Beansprucht wird ferner die Verwendung des Polyethercarbonatpolyols als vernetzbare Komponente innerhalb einer Vernetzungsreaktion zur Herstellung duromerer oder elastomerer Netzwerke.

WO 2014/060329 A1 betrifft ein Verfahren zur Herstellung von Polyurethanelastomeren, wobei in einem ersten Schritt i) ein NCO-terminiertes Prepolymer aus den Komponenten aus der Gruppe bestehend aus A) mindestens einem organischen Polyisocyanat enthaltend mindestens zwei NCO-Gruppen und B) mindestens einem Polyol mit einem zahlenmittleren Molekulargewicht von 500 bis 5000 g/mol und einer Funktionalität von 2 bis 4, in Gegenwart von C) gegebenenfalls Katalysatoren und/oder D) gegebenenfalls Hilfs- und Zusatzmitteln hergestellt wird und in einem zweiten Schritt ii) das Prepolymer aus Schritt i) ausschließlich mit Komponenten aus der Gruppe bestehend aus E) einem oder mehreren Kettenverlängerern und/oder Vernetzern mit einem zahlenmittleren Molekulargewicht von 60 bis 490 g/mol, einer Funktionalität von 2 bis 3 und ausschließlich OH-Gruppen als gegenüber Isocyanat reaktive Gruppen im Molekül in Gegenwart von F) gegebenenfalls Katalysatoren und/oder G) gegebenenfalls Hilfs- und Zusatzmitteln umgesetzt wird, wobei das Molverhältnis der Summe der CO-Gruppen aus A) zu der Summe der gegenüber Isocyanaten reaktiven Gruppen aus B) und E) 0,9 : 1 bis 1,2 : 1 beträgt und die Komponente B) wenigstens ein Polyethercarbonatpolyol in einer Menge von mindestens 20 Gew.-%, bezogen auf die Komponente B), enthält, welches durch Anlagerung von Kohlendioxid und Alkylenoxiden mit drei oder vier Kohlenstoffatomen an H-funktionelle Startsubstanzen unter Verwendung von Katalysatoren erhalten wird.

Ungesättigte Polyethercarbonatpolyole sind über ihre Doppelbindungen vernetzbar. So offenbart WO 2015/032645 A1 ein Verfahren zur Herstellung Mercapto-vernetzter Polyethercarbonate, wobei Doppelbindungen enthaltende Polyethercarbonatpolyole mit polyfunktionellen Mercaptanen und/oder Schwefel unter Einwirkung von Initiatorverbindungen zur Reaktion gebracht werden.

Eine andere denkbare Quervernetzungsreaktion ist die Umsetzung der ungesättigten Polyethercarbonatpolyole mit Radikalstartern. Für einen Einsatz der ungesättigten Polyethercarbonatpolyole in der Herstellung von Elastomeren ist jedoch ihr nach dem heutigen Stand erreichbares Molekulargewicht mindestens um den Faktor 10 zu niedrig. Dieses ist insbesondere dann der Fall, wenn bei den hieraus hergestellten Polyurethanen die Doppelbindungen zunächst noch intakt bleiben sollen.

WO 2015/032737 A1 betrifft ein Verfahren zur Herstellung von Polyethercarbonatpolyolen, wobei die Polyethercarbonatpolyole Doppelbindungen enthalten, umfassend die Schritte:

(a) Vorlegen eines Katalysators und:

(αα) eines Suspensionsmittels, das H-funktionellen Gruppen enthält und/oder
(αβ) einer H-funktionellen Starterverbindung

(γ) Zudosieren von Kohlendioxid, eines Alkylenoxides, das keine ungesättigte Gruppe enthält, und mindestens einer ungesättigten Verbindung,

wobei die in Schritt (γ) zudosierten ungesättigte Verbindung aus der Gruppe der ungesättigten Alkylenoxide und/oder ungesättigten cyclischen Anhydride ausgewählt sind, wobei

(γ1) eine der ungesättigten Verbindungen eine Doppelbindung umfassend mindestens einen Substituenten ausgewählt aus der Gruppe $-OX^1$, $-OCOX^1$, $-X^1$, $-CH_2OX^1$ und/oder $-CH=CHX^1$ umfasst und wobei $X^1$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht;

(γ2) und eine andere der ungesättigten Verbindungen eine Doppelbindung umfassend mindestens einen Substituenten ausgewählt aus der Gruppe -F, -Cl, -Br, -I, -COH, $-COX^2$,$-COOX^2$, -C≡N und/oder $-NO_2$ umfasst oder ein ungesättigtes, substituiertes oder unsubstituiertes cyclisches Anhydrid einer organischen Dicarbonsäure ist und wobei $X^2$ jeweils für substituiertes oder unsubstituiertes Alkyl, substituiertes oder unsubstituiertes Cycloalkyl, substituiertes oder unsubstituiertes Aryl oder eine substituierte oder unsubstituierte Methylenkette steht.

In WO2015/000903 A1 werden Polyurethan-Harz-Zusammensetzungen enthaltend Polyethercarbonatpolyole sowie Polyurethan - Komposite aus den entsprechenden PU-Harzen offenbart, wohingegen keine Kohlenstoff-Kohlenstoff Doppelbindungen haltige Polyethercarbonatpolyole offenbart.

Es ist wünschenswert, die Herstellung von Polyurethan-Elastomeren in einem möglichst einfachen, zweistufigen Verfahren durchzuführen. In einem ersten Schritt soll ein bei Raumtemperatur festes Präpolymer in einem zeitlich angemessenem Zeitraum in hoher Ausbeute basierend auf den eingesetzten Mischungen aus Polyisocyanaten sowie Polyoxyalkylenverbindungen bereitgestellt werden, welches einerseits einen verarbeitbaren Feststoff darstellt, andererseits jedoch nicht klebrig, d.h. mit einer geringen Adhäsionsbruchenergie, ist und daher auf Maschinen verarbeitbar und insbesondere formbar ist. Hierbei soll infolge der geringeren Klebrigkeit bzw. Adhäsionsbruchenergie ein aufwendiges Reinigen der vorgenannten zu verwendenen Maschinen vermieden werden. In dem sich daran anschließenden Endvernetzungsschritt soll durch Umsetzung der Kohlenstoff-Kohlenstoff-Mehrfachbindungen ein Elastomer erhalten werden.

Die vorliegende Erfindung hat sich die Aufgabe gestellt, ein Verfahren zur Herstellung eines solchen Präpolymers bereitzustellen, bei dem ungeachtet ihres Molekulargewichts derzeit verfügbare Polyethercarbonatpolyole eingesetzt werden können.

Erfindungsgemäß gelöst wurde die Aufgabe durch Verfahren zur Herstellung eines Kohlenstoff-Kohlenstoff Mehrfachbindungen enthaltenden Präpolymers, bevorzugt eines Kohlenstoff-Kohlenstoff Doppelbindungen enthaltenden Präpolymers, wobei eine Polyolkomponente A mit einer Isocyanatgruppen-haltigen Komponente B umgesetzt wird und die Polyolkomponente ein Kohlenstoff-Kohlenstoff Mehrfachbindungen enthaltendes Polyethercarbonatpolyol, bevorzugt ein Kohlenstoff-Kohlenstoff Doppelbindungen enthaltendes Polyethercarbonatpolyol umfasst, wobei die molare NCO-Funktionalität der Isocyanatgruppen-haltigen Komponente B von 2,15 bis 2,90, bevorzugt von 2,40 bis 2,80 beträgt, und wobei der Gehalt an Kohlenstoff-Kohlenstoff Mehrfachbindungen, bevorzugt Kohlenstoff-Kohlenstoff Doppelbindungen, im Polyethercarbonatpolyol von 0,5 Gew.-% bis 17,0 Gew.-%, bevorzugt von 1,0 Gew.-% bis 6,0 Gew.-% und besonders bevorzugt von 1,5 Gew.-% bis 3,0 Gew.-% beträgt.

Es wurde gefunden, dass die durch das erfindungsgemäße Verfahren erhältlichen Präpolymere eine für ihre Weiterverarbeitung günstige Netzwerkdichte aufweisen. Man erhält nicht-klebrige Feststoffe, in denen die Mehrfachbindungen, bevorzugt Doppelbindungen, des Polyethercarbonatpolyol erhalten sind. Die Präpolymere weisen eine hohe Elastizität und geringe Adhäsionsbruchenenergie (geringe Klebekraft) auf.

Als die durchschnittliche molare NCO-Funktionalität wird dabei die mittlere Anzahl an NCO-Gruppen pro Molekül der in der Mischung eingesetzten Isocyanate verstanden. Hierbei wird die durchschnittliche molare NCO-Funktionalität der Isocyanatgruppen-haltigen Komponente B aus den molaren Anteilen der eingesetzten Isocyanate und deren jeweiligen durchschnittlichen molaren NCO-Funktionalität wie folgt berechnet:

$$I_B = \sum_i (x_i \times I_i)$$

wobei $I_B$ die durchschnittliche molare NCO-Funktionalität der Isocyanatgruppen-haltigen Komponente B, $x_i$ der molare Anteil des jeweiligen Isocyanates i in der Komponente B und $I_i$ die durchschnittliche molare NCO-Funktionalität des Isocyanates i ist.Soweit nicht anders angezeigt bedeutet der Begriff "Mehrfachbindung" im Kontext der vorliegenden Anmeldung eine Kohlenstoff-Kohlenstoff-Mehrfachbindung, umfassend eine Kohlenstoff-Kohlenstoff- Doppel- oder -Dreifachbindung, bevorzugt eine Kohlenstoff-Kohlenstoff-Doppelbindung, welche nicht Bestandteil eines aromatischen Systems ist.

Der Gehalt an Kohlenstoff-Kohlenstoff Mehrfachbindungen, bevorzugt Kohlenstoff-Kohlenstoff Doppelbindungen, im Polyethercarbonatpolyol ergibt sich für das Kohlenstoff-Kohlenstoff Doppelbindungen, enthaltende Polyethercarbonatpolyol als der Quotient des angegebenen Doppelbindungsgehalts der eingesetzten Polyethercarbonatpolyole angegeben in C2H4 Äquivalenten pro Masse Gesamtmasse des und ist in C2H4 Äquivalenten pro Masse Polyethercarbonatpolyol angegeben. Für das Kohlenstoff-Kohlenstoff Dreifachbindungen, enthaltende Polyethercarbonatpolyol als der Quotient des angegebenen Dreifachbindungsgehalts der eingesetzten Polyethercarbonatpolyole angegeben in $C_2H_2$ Äquivalenten pro Masse Gesamtmasse des und ist in $C_2H_2$ Äquivalenten pro Masse Polyethercarbonatpolyol angegeben.

Im Rahmen des erfindungsgemäßen Verfahrens sind unter Polyethercarbonatpolyolen auch Polyethercarbonatpolyole, Polyetherpolyestercarbonatpolyole und/oder Polycarbonatpolyole zu verstehen.

In einer weiteren bevorzugten Ausführungsform ist das Kohlenstoff-Kohlenstoff Mehrfachbindungen enthaltende Polyethercarbonatpolyol, bevorzugt das Kohlenstoff-Kohlenstoff Doppelbindungen enthaltende Polyethercarbonatpolyol, erhältlich ist durch Anlagerung eines Alkylenoxids, mindestens eines Kohlenstoff-Kohlenstoff Mehrfachbindungshaltigen Monomers und $CO_2$ an eine H-funktionelle Starterverbindung in Gegenwart eines Doppelmetallcyanidkatalysators.

In dem erfindungsgemäßen Verfahren können als Alkylenoxide Alkylenoxide mit 2-45 Kohlenstoffatomen eingesetzt werden. Bei den Alkylenoxiden mit 2 - 45 Kohlenstoffatomen handelt es sich beispielsweise um eine oder mehrere

Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, insbesondere Propylenoxid eingesetzt werden. Werden Ethylenoxid und Propylenoxid in Mischung eingesetzt, so beträgt das molare Verhältnis EO/PO 1:99 bis 99:1, bevorzugt 5:95 bis 50:50. Werden Ethylenoxid und/oder Propylenoxid in Mischung mit anderen ungesättigten Alkylenoxiden eingesetzt, eingesetzt, so beträgt ihr Anteil 1 bis 40 mol-%, bevorzugt 2 bis 20 mol-%.

Als Katalysator für die Herstellung der erfindungsgemäßen Polyethercarbonatpolyole kann beispielsweise ein DMC-Katalysator (Doppel-Metall-Cyanid-Katalysator) eingesetzt. Es können zusätzlich oder alternativ auch andere Katalysatoren eingesetzt werden. Für die Copolymerisation von Alkylenoxiden und $CO_2$ können beispielsweise zusätzlich oder alternativ Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Es ist bevorzugt, dass der Katalysator ein DMC-Katalysator ist.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(2.) wobei im zweiten Schritt der Feststoff aus der aus (a) erhaltenen Suspension durch bekannte Techniken (wie Zentrifugation oder Filtration) abgetrennt wird,

(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (II) auf,

$$M(X)_n \qquad (II),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (III) auf,

$$M_r(X)_3 \qquad (III),$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M(X)_s \qquad (IV),$$

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$$M(X)_t \qquad (V),$$

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (VI) auf

$$(Y)_aM'(CN)_b(A)_c \qquad (VI),$$

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen

der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VII)

$$M_x[M'_{x'}(CN)_y]_z \qquad (VII),$$

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des

organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5,0 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Für die Herstellung der erfindungsgemäßen Polyethercarbonatpolyole wird weiterhin mindestens eine H-funktionelle Starterverbindung eingesetzt.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen

Formel (VIII),

$$HO\text{-}(CH_2)_x\text{-}OH \qquad (VIII)$$

wobei x eine Zahl von 1 bis 20, bevorzugt eine gerade Zahl von 2 bis 20 ist. Beispiele für Alkohole gemäß Formel (VII) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Das erfindungsgemäß verwendete $CO_2$ muss einen Reinheitsgrad von mindestens 80%, vorzugsweise von mindestens 95%, aufweisen, wobei der Anteil schwefelhaltiger Verunreinigungen, wie COS oder $SO_2$ unter 1 Gew.-%, vorzugsweise unter 0,1 Gew.-%, liegen muss. Es wird vorzugsweise $CO_2$ verwendet, das als Nebenprodukt bei der Ammoniakherstellung, der Ethylenoxidherstellung, durch die Wassergas-shift-Reaktion, bei Verbrennungsprozessen, vorzugsweise in Kraftwerken, oder beim Kalkbrennen anfällt. Gegebenenfalls müssen Reinigungsschritte folgen, bei denen insbesondere schwefelhaltige Verunreinigungen, aber auch Kohlenmonoxid entfernt werden. Inerte Gase, wie Stickstoff oder Argon dürfen bis zu einem Gehalt von unter 20%, vorzugsweise von unter 5%, enthalten sein. Besonders bevorzugt wird $CO_2$ verwendet, das als Nebenprodukt bei der Ammoniakherstellung anfällt oder durch Wassergas-shift-Reaktion hergestellt wird, da $CO_2$ aus diesen Quellen besonders niedrige Gehalte an schwefelhaltigen Verunreinigungen aufweisen.

In einer weiteren Ausführungsform des erfindungsgemäßen Verfahrens weist das Kohlenstoff-Kohlenstoff Mehrfachbindungen enthaltende Polyethercarbonatpolyol, bevorzugt das Kohlenstoff-Kohlenstoff Doppelbindungen enthaltende Polyethercarbonatpolyol, einen $CO_2$ Anteil von 3 Gew.-% bis 50 Gew.-% bevorzugt von 5 Gew.-% bis 25 Gew.-% aufweist.

In einer weiteren Ausgestaltung des Verfahrens wird das Kohlenstoff-Kohlenstoff Mehrfachbindungshaltige Monomer ausgewählt wird aus mindestenes einem der Monomere aus einer oder mehrerer der Gruppen bestehend aus

(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren wie besipeilsweise Ölsäure, Linolsäure, Konjuenfettsäure, oder Linolensäure, teilweise epoxidierte Fette und Öle, wie teilweise epoxidiertes Sojaöl, Leinöl, Rapsöl, Palmöl oder Sonnenblumenöl, und/oder deren Mischungen.

(b) Alkylenoxid mit Doppelbindung der allgemeinen Formel (IX) ist:

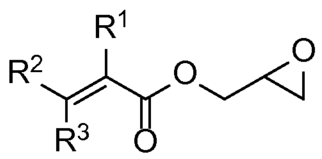

(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind. Die Verbindungen nach obiger Formel (IX) zeigen als bevorzugte Vertreter der Gruppe der Glycidylester α,β-ungesättigter Säuren ein Substitutionsmuster, welches sich in besonderer Weise zum Aufbau von Polyethercarbonatpolyolen mit ungesättigten Gruppen eignet. Diese Verbindungsklasse lässt sich mittels des erfindungsgemäß einsetzbaren DMC-Katalysators mit hohen Ausbeuten zu Polyethercarbonatpolyolen mit ungesättigten Gruppen umsetzten. Des Weiteren können sich durch die sterischen und elektronischen Voraussetzungen im Bereich der Doppelbindung, gute Möglichkeiten zur weiteren Umsetzung zu höhermolekularen, vernetzten Polyethercarbonatpolyolen ergeben.

(c) cyclisches Anhydrid der Formel (X), (XI) oder (XII) entspricht:

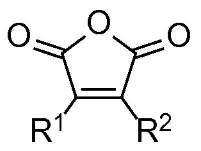

(X)

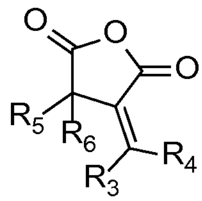

(XI)

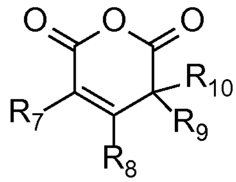

,

(XII)

wobei $R_1$ bis $R_{10}$ unabhängig voneinander H, Halogen, substituierte oder nicht-substituierte C1-C22-Alkyl, substituierte oder nicht-substituierte C6-C12 Aryl sind. Bevorzugte Verbindungen der Formel (IX), (X) (XI) sind Maleinsäureanhydrid, Halogen- oder Alkylsubstituierte Maleinsäureanhydride und Itaconsäureanhydrid.

(d) 4-Cyclohexen-1,2-disäureanhydrid, 4-Methyl-4-cyclohexen-1,2-disäureanhydrid, 5,6-Norbornen-2,3 -disäureanhydrid, Allyl-5,6-norbornen-2,3 -disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid.
und

(e) Alkylenoxide mit Kohlenstoff-Kohlenstoff Dreifachbindung enthaltenden Substituenten.

In einer weiteren Ausgestaltung des Verfahrens wird das Kohlenstoff-Kohlenstoff Mehrfachbindungshaltige Monomer ausgewählt wird aus mindestenes einem der Monomere aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid,
(d) 4-Cyclohexen-1,2-disäureanhydrid und 5,6-Norbornen-2,3-disäureanhydrid
und
(e) Glycidylpropargylether.

Das molare Verhältnis der eingesetzten gesättigten Alkylenoxide zu den eingesetzten ungesättigten Alkylenoxiden und Anhydriden, bzw. deren Mischung beträgt von 55,0 mol-% bis 99,5 mol-%, bevorzugt von 60,0 mol-% bis 99,0 mol-%.
Die ungesättigten Comonomere können statistisch oder blockweise in den Mehrfachbindungen enthaltenden Polyethercarbonatpolyolen verteilt sein. Auch Gradientenpolymere sind einsetzbar.
Der Begriff Terpolymerisation im Sinne der Erfindung beinhaltet die Polymerisation von mindestens einem Alkylenoxid, mindestens einem Comonomeren mit einer Mehrfachbindung (Alkylenoxid und/oder cyclisches Anhydrid) und $CO_2$. Terpolymerisation im Sinne der Erfindung schließt insbesondere auch die Copolymerisation von gesamt mehr als drei Monomeren mit ein.
Eine bevorzugte Ausführungsform des erfindungsgemäß einsetzbaren Verfahrens zur Herstellung von Mehrfachbindungen enthaltenden Polyethercarbonatpolyolen ist dadurch gekennzeichnet, dass

(a) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen vor oder nach der ersten Aktivierungsstufe zugesetzt wird,

(β) [zweite Aktivierungsstufe] eine Teilmenge (bezogen auf die Gesamtmenge der in den Schritten (β) und (γ)

eingesetzten Menge an Alkylenoxiden) von einem oder mehreren Alkylenoxiden zu der aus Schritt (a) resultierenden Mischung zugesetzt wird, wobei die Zugabe einer Teilmenge an Alkylenoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] ein oder mehrere Alkylenoxiden, mindestens einer ungesättigter Verbindung (Alkylenoxid und/oder cyclisches Anhydrid) und Kohlendioxid zu der aus Schritt (β) resultierenden Mischung fortwährend zudosiert werden, wobei die für die Terpolymerisation eingesetzten Alkylenoxide gleich oder von den bei Schritt (β) eingesetzten Alkylenoxiden verschieden sein können.

Im Folgenden wird diese bevorzugte Ausführungsform am Beispiel der Polyethercarbonatpolyole detailliert beschrieben.

Zu Schritt (α):

Die Zugabe der einzelnen Komponenten in Schritt (a) kann gleichzeitig oder nacheinander in beliebiger Reihenfolge erfolgen; bevorzugt wird in Schritt (a) zunächst der DMC-Katalysator vorgelegt und gleichzeitig oder anschließend das Suspensionsmittel, das keine H-funktionellen Gruppen enthält, die H-funktionelle Starterverbindung, das Gemisch aus einem Suspensionsmittel, das keine H-funktionellen Gruppen enthält und der H-funktionellen Starterverbindung oder das Gemisch aus mindestens zwei H-funktionellen Starterverbindungen zugesetzt.

Gegenstand einer bevorzugten Ausführungsform ist ein Verfahren, wobei in Schritt (a) [erste Aktivierungsstufe]

(α1) in einem Reaktor der DMC-Katalysator und ein Suspensionsmittel und/oder eine oder mehrere H-funktionelle Starterverbindungen vorgelegt werden,

(a2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (a) [erste Aktivierungsstufe]

(α1) ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre vorgelegt wird und

(a2) in das resultierende Gemisch aus DMC-Katalysator und dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird,

wobei der Doppelmetallcyanid-Katalysator zu dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen in Schritt (α1) oder unmittelbar anschließend in Schritt (a2) zugesetzt werden kann.

Der DMC-Katalysator kann in fester Form oder in einem Suspensionsmittel und/oder einer H-funktionellen Starterverbindung suspendiert zugegeben werden. Wird der DMC-Katalysator als Suspension zugegeben, wird diese bevorzugt in Schritt (α1) dem Suspensionsmittel und/oder der einen oder mehreren H-funktionellen Starterverbindungen zugefügt.

Zu Schritt (β):

Der Schritt (β) der zweiten Aktivierungsstufe kann in Gegenwart von $CO_2$ und/oder Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Alkylenoxids kann bei einem beliebig zuvor gewählten Vordruck erfolgen. Als Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Alkylenoxids der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt (β) eingesetzte Menge an einem oder mehreren Alkylenoxiden 0,1 bis 25,0 Gew.-%, bevorzugt 1,0 bis 20,0 Gew.-%, besonders bevorzugt 2,0 bis 16,0 Gew.-%, bezogen auf die im Schritt (a) eingesetzte Menge an Suspensionsmittel und/oder H-funktioneller Starterverbindung. Das Alkylenoxid kann in einem Schritt oder schrittweise in mehreren Teilmengen zugegeben werden.

In einer besonders bevorzugten Ausführungsform der Erfindung wird bei der Aktivierung in Schritt (β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (a) resultierenden Mischung zugesetzt, wobei die Zugabe einer Teilmenge an Alkylenoxid gegebenenfalls in Gegenwart von $CO_2$ und/oder Inertgas erfolgen kann. Der Schritt (β) kann auch mehrfach erfolgen. Der DMC-Katalysator wird vorzugsweise in einer Menge eingesetzt, so dass der Gehalt an DMC-Katalysator im resultierenden Mehrfachbindungen enthaltenden Polyethercarbonatpolyol 10 bis 10000 ppm, besonders bevorzugt 20 bis 5000 ppm und höchst bevorzugt 50 bis 500 ppm beträgt.

Im zweiten Aktivierungsschritt kann das Alkylenoxid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

Zu Schritt (γ):

Die Dosierung des oder der Alkylenoxide, der ungesättigten Verbindungen, im Folgenden auch als Monomere bezeichnet, und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Monomere den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung der Monomere kann simultan, wechselweise oder sequentiell zur Kohlendioxid-Dosierung erfolgen. Es ist möglich, die Monomere mit einer konstanten Dosierrate zu dosieren oder die Dosierrate kontinuierlich oder schrittweise zu steigern oder zu senken oder die Monomere portionsweise zuzugeben. Bevorzugt werden die Monomere mit konstanter Dosierrate dem Reaktionsgemisch zugegeben. Werden mehrere Alkylenoxide zur Synthese der Mehrfachbindungen enthaltenden Polyethercarbonatpolyole eingesetzt, so können die Alkylenoxide einzeln oder als Gemisch zudosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Monomere und/oder des Kohlendioxids ist es möglich, statistische, alternierende, blockartige oder gradientenartige Doppelbindungen enthaltende Polyethercarbonatpolyole zu synthetisieren.

Vorzugsweise wird ein Überschuss an Kohlendioxid bezogen auf die berechnete Menge an benötigtem Kohlendioxid in Mehrfachbindungen enthaltenden Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Mehrfachbindungen enthaltenden Polyethercarbonatpolyole als vorteilhaft erwiesen. Es ist möglich, das Kohlendioxid dem Reaktionsbehälter kontinuierlich oder diskontinuierlich zuzuführen. Dies hängt davon ab, wie schnell die Monomere und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Monomere ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,

(ii) Verwendung eines Hohlwellenrührers,

(iii) eine Kombination aus den Dosierungen gemäß (i) und (ii), und/oder

(iv) Begasung über die Flüssigkeitsoberfläche durch Einsatz mehrstufiger ausgeführter Rührorgane.

Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend $CO_2$ und ggf. unverbrauchte Monomere) aus dem über der Reaktionsmischung befindlichen Gasraum abgesaugt und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Monomeren, wieder in das Reaktionsgemisches gemäß (i), (ii), (iii) und/oder (iv) eingeleitet.

Bevorzugt wird der Druckabfall, welcher über Einbau des Kohlendioxids, der Monomere bei der Terpolymerisation in das Reaktionsprodukt entsteht, über frisch zudosiertes Kohlendioxid ausgeglichen.

Die Einleitung der Monomere kann separat oder zusammen mit dem $CO_2$ sowohl über die Flüssigkeitsoberfläche oder direkt in die flüssige Phase erfolgen. Bevorzugt erfolgt die Einleitung der Monomere direkt in die flüssige Phase, da dies den Vorteil hat, dass eine rasche Durchmischung der eingebrachten Monomere mit der flüssigen Phase erfolgt und so lokale Konzentrationsspitzen der Monomere vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Mehrfachbindungen enthaltende Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit der Monomere zu achten. Sie ist so einzustellen, dass trotz der inhibierenden Wirkung des Kohlendioxids die Monomere genügend schnell abreagieren. Die Konzentration an freien Monomeren in der Reaktionsmischung während der zweiten Aktivierungsstufe (Schritt β) beträgt vorzugsweise > 0 bis 100 Gew.-%, besonders bevorzugt > 0 bis 50 Gew.-%, höchst bevorzugt > 0 bis 20 Gew.-% (jeweils bezogen auf das Gewicht der Reaktionsmischung). Die Konzentration an freien Monomeren in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

Eine weitere mögliche Ausführungsform für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß den Schritten (a) und (β) aktivierte Katalysator-Starter-Mischung in demselben Reaktor weiter mit den Monomeren und Kohlendioxid umgesetzt. In einer weiteren bevorzugten Ausführungsform wird die gemäß den Schritten (a) und (β) aktivierte Katalysator-Starter-Mischung in einem anderen Reaktionsbehältnis (beispielsweise einem Rührkessel, Rohrreaktor oder Schlaufenreaktor) weiter mit den Monomeren und Kohlendioxid umgesetzt. In einer weiteren bevorzugten Ausführungsform wird die gemäß dem Schritt (a) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit den Monomeren und Kohlendioxid umgesetzt.

Bei Reaktionsführung in einem Rohrreaktor werden die gemäß Schritt (a) vorbereitete Katalysator-Starter-Mischung oder die gemäß der Schritte (a) und (β) aktivierte Katalysator-Starter-Mischung und gegebenenfalls weitere Starter sowie die Monomeren und Kohlendioxid kontinuierlich durch ein Rohr gepumpt. Bei Verwendung einer gemäß Schritt (a) vorbereiteten Katalysator-Starter-Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner variieren je nach gewünschtem Polymer.

In einer Verfahrensvariante wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Monomere kann am Eingang des Reaktors eingebracht werden. Die Restmenge der Monomere wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes $CO_2$ und die Monomere mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Mehrfachbindungen enthaltenden Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet sein, in dem nach der Reaktion vorhandene Restkonzentrationen freier Monomere abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.-% an Monomeren. Die Nachreaktionszeit bzw. die Verweilzeit im nachgeschalteten Reaktor beträgt bevorzugt 10 min bis 24 h, besonders bevorzugt 10 min bis 3 h.

In einer weiteren bevorzugten Ausführungsform des Verfahrens zur Herstellung der Polyethercarbonatpolyolen kann die Temperatur im Schritt (γ) größer oder gleich 60°C und kleiner oder gleich 150 °C betragen. In einer besonders bevorzugten Ausführungsform des Verfahrens kann die Temperatur im Schritt (γ) größer oder gleich 80°C und kleiner oder gleich 130 °C und ganz besonders bevorzugt größer oder gleich 90°C und kleiner oder gleich 120 °C betragen. Dieser Temperaturbereich während der Polymerisation hat sich als besonders geeignet erwiesen, um mit einer hinreichenden Reaktionsgeschwindigkeit und mit einer hohen Selektivität die Polyethercarbonatpolyole mit ungesättigten Gruppen zu synthetisieren. Im Bereich niedrigerer Temperaturen kann sich eine nur ungenügende Reaktionsgeschwindigkeit einstellen und bei höheren Temperaturen kann der Anteil an unerwünschten Nebenprodukten zu stark ansteigen. Beispielsweise kann es bei Wahl zu hoher Temperaturen zu einer vorzeitigen Vernetzung der ungesättigten Gruppen kommen.

Die erfindungsgemäß erhältlichen Mehrfachbindungen enthaltenden Polyethercarbonatpolyole haben vorzugsweise eine durchschnittliche OH-Funktionalität (d.h. durchschnittliche Anzahl von OH-Gruppen pro Molekül) von mindestens 1,0 bevorzugt von 1,5 bis 10, besonders bevorzugt von $\geq$ 1,8 bis $\leq$ 2,2.

Das Molekulargewicht der erhaltenen Mehrfachbindungen enthaltenden Polyethercarbonatpolyole beträgt bevorzugt mindestens 400 g/mol, besonders bevorzugt 400 bis 1’000’000 g/mol und höchst bevorzugt 500 bis 60’000 g/mol.

Die Suspensionsmittel, die in Schritt (a) zum Suspendieren des Katalysators eingesetzt werden, enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (a) zum Suspendieren des Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1 -on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7*E*)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Alkylenoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbomendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Die Komponente B entspricht einer Isocyanatgruppen-haltigen Komponente, deren durchschnittliche molare NCO-Funktionalität von 2,15 bis 2,9, bevorzugt von 2,4 bis 2,8 beträgt.

Geeignete Polyisocyanate der Komponente B sind die dem Fachmann an sich bekannten aromatischen, araliphatischen, aliphatischen oder cycloaliphatischen Polyisocyanate, welche auch Iminooxadiazindion-, Isocyanurat-, Uretdion-, Urethan-, Allophanat-, Biuret-, Harnstoff-, Oxadiazintrion, Oxazolidinon-, Acylharnstoff-, Carbamat- und/oder Carbodiimid-Strukturen aufweisen können. Diese können in B einzeln oder in beliebigen Mischungen untereinander eingesetzt werden.

Die vorstehend genannten Polyisocyanate basieren dabei auf dem Fachmann an sich bekannten Diisocyanaten oder Triisocyanaten oder höher funktionellen Isocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Diisocyanate oder Triisocyanate oder höher funktionellen Isocyanaten sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Covestro AG, Leverkusen, DE), 4-Isocyanatomethyl-1,8-octandiisocyanat (Triisocyanatononan, TIN), ω,ω'-Diisocyanato-1,3-dimethylcyclohexan ($H_6$XDI), 1-Isocyanato-1-methyl-3-isocyanatomethylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate.

Bevorzugt weisen die Verbindungen der Komponente B dabei einen Gehalt an Isocyanatgruppen von 2 Gew.-% bis 60 Gew.-%, bevorzugt von 15 Gew.-% bis 50 Gew.-%.

Besonders bevorzugt werden in Komponente B Polyisocyanate oder Polyisocyanatgemische der vorstehend genannten Art mit ausschließlich aliphatisch und/oder aromatisch gebundenen Isocyanatgruppen eingesetzt.

Ganz besonders bevorzugt enthält die Isocyanatgruppen-haltige Komponente B mindestens 2 Polyisocyanate ausgewählt aus der Gruppe bestehend aus HDI, MDI, TDI deren Trimerisierungs- oder höheren Oligomerisierungsprodukte und deren Addukte.

Bevorzugt entspricht Komponente B einer Isocyanatgruppen-haltigen Komponente, deren durchschnittliche molare NCO-Funktionalität von 2,15 bis 2,9 beträgt und umfasst die Isocyanatgruppen-haltige Komponente B mindestens ein Polyisocyanat B1 mit einer durchschnittlichen molaren NCO-Funktionalität von 2,0 bis 2,2 und mindestens ein Polyisocyanat B2 mit einer durchschnittlichen molaren NCO-Funktionalität von 2,8 bis 3,2, wobei es sich bevorzugt um eine Mischung aus einem Diisocyanat-Monomer und einem Diisocyanat-Trimer handelt. Bevorzugt handelt es sich bei dem Diisocyanat-Monomer um MDI und/oder TDI und bei dem Trimer um ein HDI-basiertes Trimer (z.B. Covestro Desmodur N3300 oder Desmodur N3600).

Besonders bevorzugt entspricht Komponente B einer Isocyanatgruppen-haltigen Komponente, deren durchschnittliche molare NCO-Funktionalität von 2,4 bis bis 2,9 beträgt und umfasst die Isocyanatgruppen-haltige Komponente B ein Polyisocyanat B1 mit einer durchschnittlichen molaren NCO-Funktionalität von 1,8 bis 2,2 und ein Polyisocyanat B2 mit einer durchschnittlichen molaren NCO-Funktionalität von 2,8 bis 3,2, wobei es sich bevorzugt um eine Mischung aus einem Diisocyanat-Monomer und einem Diisocyanat-Trimer handelt. Bevorzugt handelt es sich bei dem Diisocyanat-Monomer um MDI und/oder TDI und bei dem Trimer um ein HDI-basiertes Trimer.

Im erfindungsgemäßen Verfahren wird die Umsetzung der Polyolkomponente A mit der Isocyanatgruppen-haltigen Komponente B bevorzugt bei einem NCO-Index von 0,80 bis 1,30, besonders bevorzugt von 0,95 bis 1,20 und ganz besonders bevorzug von 0,98 bis 1,10 durchgeführt.

Zur Umsetzung der Polyolkomponente A mit Komponente B können Katalysatoren eingesetzt werden, die die NCO-OH-Reaktion katalysieren. Solche Katalysatoren sind dem Fachmann bekannt. Beispielhaft genannt seien: DBTL, DABCO, Dibutylzinnoxid, Zinndioctat, Zinndichlorid, Zinkoctoat, Bismuthoctoat, Bismuthneodecanoat oder DBU. Desweiteren können die in der Polyurethanchemie üblichen Hilfs- und Zusatzstoffe, wie z.B. Weichmacher, Antioxidantien, UV- und Hitzestabilisatoren mitverwendet werden.

Gegenstand der Erfindung ist auch ein Kohlenstoff-Kohlenstoff-Mehrfachbindungen enthaltendes Präpolymer, bevorzugt Kohlenstoff-Kohlenstoff-Doppelbindungen enthaltendes Präpolymer, erhältlich durch ein Verfahren wie auf den vorangegangenen Seiten beschrieben.

In einer bevorzugten Ausführungsform beträgt der Gehalt an Kohlenstoff-Kohlenstoff Mehrfachbindungen im Präpolymer von 0,5 Gew.-% bis 15,0 Gew.-%, besonders bevorzugt 1,0 Gew.-% bis 6,0 Gew.-% und ganz besonders bevorzugt 1,5 Gew.-% bis 3,0 Gew.-%.

In einer weiteren Ausführungsform ist auch ein Kohlenstoff-Kohlenstoff Mehrfachbindungen, bevorzugt Kohlenstoff-Kohlenstoff Doppelbindungen, enthaltendes Präpolymer erhältlich durch Umsetzung einer Polyolkomponente A mit einer Isocyanatgruppen-haltigen Komponente B, wobei die Polyolkomponente ein Kohlenstoff-Kohlenstoff Mehrfachbindungen, bevorzugt Kohlenstoff-Kohlenstoff Doppelbindungen, enthaltendes Polyethercarbonatpolyol umfasst und wobei der Gehalt an Kohlenstoff-Kohlenstoff Mehrfachbindungen, bevorzugt Kohlenstoff-Kohlenstoff Doppelbindungen, von 0,5 Gew.-% bis 15,0 Gew.-%, besonders bevorzugt 1,0 Gew.-% bis 6,0 Gew.-% und ganz besonders bevorzugt 1,5 Gew.-% bis 3,0 Gew.-% beträgt.

Der Gehalt an Kohlenstoff-Kohlenstoff Mehrfachbindungen, bevorzugt Kohlenstoff-Kohlenstoff Doppelbindungen, der Präpolymere ergibt sich für das Kohlenstoff-Kohlenstoff Doppelbindungen, enthaltende Präpolymer als der Quotient des angegebenen Doppelbindungsgehalts der eingesetzten Polyethercarbonatpolyole (angegeben in $C_2H_4$ Äquivalenten pro Masse Polyethercarbonatpolyol) bezogen auf die Gesamtmasse der eingesetzten Reaktanden (Polyethercarbonatpolyol, Isocyanatmischung, Katalysator) und ist in $C_2H_4$ Äquivalenten pro Masse Präpolymer angegeben. Für das Kohlenstoff-Kohlenstoff Dreifachbindungen, enthaltende Präpolymer als der Quotient des angegebenen Dreifachbindungsgehalts der eingesetzten Polyethercarbonatpolyole (angegeben in $C_2H_2$ Äquivalenten pro Masse Polyethercarbonatpolyol) bezogen auf die Gesamtmasse der eingesetzten Reaktanden (Polyethercarbonatpolyol, Isocyanatmischung, Katalysator) und ist in $C_2H_2$ Äquivalenten pro Masse Präpolymer angegeben.

In einer ebenfalls bevorzugten Ausführungsform weist das Präpolymer einen Gehalt an in das Präpolymer eingebautem $CO_2$ von größer gleich 5 Gew.-%, besonders bevorzugt größer gleich 10 Gew.-% und ganz besonders bevorzugt größer gleich 20 Gew.-%auf.

In einer bevorzugten Ausführungsform des Verfahrens beträgt der NCO-Index bei der Herstellung des Präpolymers von 0,80 bis 1,30, besonders bevorzugt von 0,95 bis 1,20 und ganz besonders bevorzug von 0,98 bis 1,10 durchgeführt.

Ein weiterer Gegenstand der Erfindung ist ein Verfahren zur Herstellung eines Elastomers, umfassend die Schritte:

a-2) Bereitstellen eines nach dem erfindungsgemäßen Verfahren hergestellten Kohlenstoff-Kohlenstoff Mehrfachbindungen enthaltenden Präpolymer, bevorzugt eines Kohlenstoff-Kohlenstoff Doppelbindungen enthaltendes gemäß der obigen Beschreibung

b-2) Vernetzen des Präpolymers.

Hierbei erfolgt der Vernetzungsschritt b-1) oder b-2) bevorzugt bei Temperaturen von ≥ 30 ° C bis ≤ 200° C, besonders bevorzugt von ≥ 60 °C bis ≤ 180 °C.

Ebenfalls bevorzugt ist die Vernetzung des Präpolymers in Schritt b-1) oder b-2) in Gegenwart mindestens eines Vernetzers durchzuführen.

Ein weiterer Gegenstand der Erfindung ist ein Elastomer, erhältlich gemäß dem zuvor beschriebenen Verfahren.

## Beispiele

Die vorliegende Erfindung wird anhand der nachfolgenden Beispiele näher beschrieben, ohne jedoch darauf beschränkt zu sein.

### Einsatzstoffe

*H-funktionelle Starterverbindungen*

| | |
|---|---|
| PET-1 | Difunktionelles Poly(oxypropylen)polyol der Firma Covestro AG mit einer OH-Zahl von 112 $mg_{KOH}/g$ |

*Alkylenoxide*

| | |
|---|---|
| PO | Propylenoxid der Firma Chemgas, Reinheit > 99 % |
| AGE | Allylglycidylether der Firma Sigma Aldrich, Reinheit > 99 % |

*Anhydride*

| | |
|---|---|
| MSA | Maleinsäureanhydrid der Firma Sigma Aldrich, Reinheit > 99 % |

*Isocyanate*

| | |
|---|---|
| TDI | Diisocyanat mit einer durchschnittlichen molaren NCO-Funktionalität von 2,00 Desmodur T100 der Covestro AG, F2, $M_n$ 174 g/mol, Äquivalentgewicht 78 g/mol, NCO-Gehalt 48,0 Gew.-% |
| HDI-Trimer | Triisocyanat mit einer durchschnittlichen molaren NCO-Funktionalität von 3,10 Desmodur N3600 der Covestro AG , $M_n$ 570 g/mol, Äquivalentgewicht 148 g/mol, NCO-Gehalt 32,0 Gew.-% |

*Katalysator*

| | |
|---|---|
| DMC | Als DMC-Katalysator wurde bei allen Beispielen DMC-Katalysator hergestellt gemäß Beispiel 6 in WO 01/80994 A1 eingesetzt. |
| DBTL | Dibutylzinndilaurat der Firma Sigma Aldrich, Reinheit > 95 % |

Reaktoren

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um $\pm$5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einem Temperaturanstieg im Reaktor. Das Auftreten einer Wärmeentwicklung im Reaktor, hervorgerufen durch die kontinuierliche Umsetzung von Propylenoxid und der Verbindungen enthaltend Mehrfachbindungen während der Reaktion [Polymerisationsstufe] führte zu einem Absenken der Leistung des Heizmantels auf ca. 8% der maximalen Heizleistung. Durch die Regelung schwankte die Heizleistung um $\pm$5% der maximalen Heizleistung.

Bei dem in den Beispielen eingesetzten Rührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Methoden

Die chemische Charakterisierung der eingesetzten Polyethercarbonatpolyole erfolgte durch $^1$H-NMR Spektroskopie. Dazu wurde jeweils eine Probe der gereinigten Reaktionsmischung in deuteriertem Chloroform gelöst und auf einem Spektrometer der Firma Bruker (AV400, 400 MHz) vermessen.

Bei der Terpolymerisation von Propylenoxid, mindestens zweier ungesättigter Verbindungen und $CO_2$ resultiert neben dem cyclischen Propylencarbonat das Polyethercarbonatpolyol mit ungesättigten Gruppen, welches einerseits in Formel (XIIIa) gezeigte Polycarbonat-Einheiten enthält,

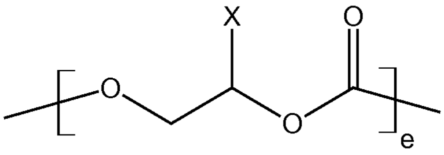 bzw. 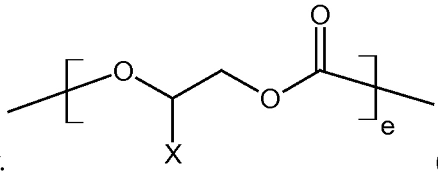 (XIIIa)

und andererseits in Formel (XIIIb) gezeigte Polyether-Einheiten enthält:

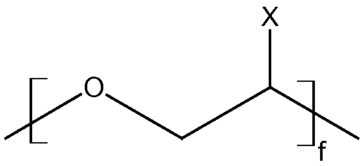 bzw. 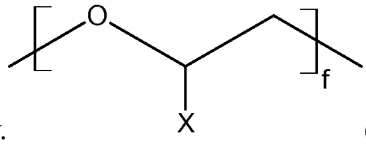 (XIIIb).

Die Charakterisierung des Reaktionsgemisches erfolgte durch $^1$H-NMR Spektroskopie und Gelpermeationschromatographie.

Das Verhältnis der Menge an cyclischem Propylencarbonat zu Polyethercarbonatpolyol (Selektivität; Verhältnis g/e) sowie der Anteil der nicht umgesetzten Monomere (Propylenoxid $R_{PO}$, Allylglycidylether $A_{Doppelbindung}$ in mol%, Maleinsäureanhydrid $B_{Doppelbindung}$ in mol%) wurden mittels $^1$H-NMR Spektroskopie bestimmt.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyethercarbonatpolyol (Verhältnis e/f) sowie der molare Anteil von in das Polymer eingebautem Allylglycidylether und Maleinsäureanhydrid wurden mittels $^1$H-NMR Spektroskopie bestimmt.

Die relevanten Resonanzen im $^1$H-NMR Spektrum (bezogen auf TMS = 0 ppm), die zur Integration verwendet wurden, ergeben sich wie folgt:

| Signal | Verschiebung in ppm | Bezeichnung | Fläche entspricht Anzahl H-Atomen |
|---|---|---|---|
| I1 | 1,10 - 1,17 | $CH_3$-Gruppe der Polyether-Einheiten | 3 |
| I2 | 1,25 - 1,34 | $CH_3$-Gruppe der Polycarbonat-Einheiten | 3 |
| I3 | 1,45 - 1,48 | $CH_3$-Gruppe des cyclischen Carbonats | 3 |
| I4 | 2,95 - 3,00 | CH-Gruppen des freien, nicht abreagierten Propylenoxids | 1 |
| I5 | 5,83 - 5,94 | CH Gruppe der in das Polymer über den Einbau von Allylglycidylether erhaltenen Doppelbindung | 1 |
| I6 | 6,22 - 6,29 | CH Gruppe der in das Polymer über den Einbau von Maleinsäureanhydrid erhaltenen Doppelbindung | 2 |
| I7 | 7,03 - 7,04 | CH Gruppe für freies, nicht abreagiertes Maleinsäureanhydrid | 2 |
| I8 | 2,85 - 2,90 | CH-Gruppen des freien, nicht abreagierten Allylglycidylethers | 1 |

Angegeben ist das molare Verhältnis der Menge an cyclischem Propylencarbonat zu Carbonat-Einheiten im Polyethercarbonatpolyol (Selektivität g/e) und das molare Verhältnis von Carbonatzu Ethergruppen im Polyethercarbonatpolyol (e/f) sowie die Anteile des nicht umgesetzten Propylenoxids (in mol%) und Maleinsäureanhydrids (in mol%).

Unter Berücksichtigung der relativen Intensitäten wurden die Werte wie folgt berechnet:
Molares Verhältnis der Menge an cyclischem Propylencarbonat zu Carbonat-Einheiten im Polyethercarbonatpolyol (Selektivität g/e):

$$g/e = I3 / I2$$

Molares Verhältnis von Carbonatgruppen zu Ethergruppen im Polyethercarbonatpolyol (e/f):

$$e/f = I2 / I1$$

Der Anteil an Carbonateinheiten ($C_{Carbonat}$ in mol%) in den Wiederholungseinheiten des Polyethercarbonatpolyols erhalten aus der Terpolymerisation von Propylenoxid, Allylglycidylether und $CO_2$:

$$C_{Carbonat} \text{ in mol\%} = [(I2/3) / ((I1/3) + (I2/3) + (I5))] \times 100\%$$

Der Anteil an Carbonateinheiten ($C_{Carbonat}$ in Gew.-%.) in den Wiederholungseinheiten des Polyethercarbonatpolyols erhalten aus der Terpolymerisation von Propylenoxid, Allylglycidylether und $CO_2$:

$$C_{Carbonat} \text{ in Gew.-\%.} = [(I2/3)*44 / ((I1/3)*58 + (I2/3)*102 + (I5)*114)] \times 100\%$$

Der Anteil der über den Einbau des Allylglycidylethers resultierenden Doppelbindungen ($A_{Doppelbindung}$ in mol%) in den Wiederholungseinheiten des Polyethercarbonatpolyols:

$$A_{Doppelbindung} \text{ in mol\%)} = [(I5) / ((I1/3) + (I2/3) + (I5))] \times 100\%$$

Der Anteil an Kohlenstoff-Kohlenstoff Doppelbindungen ($A_{Doppelbindung}$ in Gew.-%.) in den Wiederholungseinheiten des Polyethercarbonatpolyols erhalten aus der Terpolymerisation von Propylenoxid, Allylglycidylether und $CO_2$:

$$A_{Doppelbindung} \text{ in Gew.-\%.} = [(I5)*28 / ((I1/3)*58 + (I2/3)*102 + (I5)*114)] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [(I4) / ((I1/3) + (I2/3) + (I3/3) + (I4) + (I5) + (I8))] \times 100\%$$

Der molare Anteil des nicht umgesetzten Allylglycidylethers ($R_{AGE}$ in mol%) bezogen auf die Summe der bei der Aktivierung und der Copolymerisation eingesetzten Menge an Maleinsäureanhydrid, berechnet sich nach der Formel:

$$R_{AGE} = [(I8) / ((I1/3) + (I2/3) + (I3/3) + (I4) + (I5) + (I8))] \times 100\%$$

Der Anteil an Carbonateinheiten ($C'_{Carbonat}$ in mol%) in den Wiederholungseinheiten des Polyetherestercarbonatpolyols erhalten aus der Terpolymerisation von Propylenoxid, Maleinsäureanhydrid und $CO_2$:

$$C'_{Carbonat} \text{ (mol\%)} = [(I2/3) / ((I1/3) + (I2/3) + (I6/2))] \times 100\%$$

Der Anteil an Carbonateinheiten ($C'_{Carbonat}$ in Gew.-%.) in den Wiederholungseinheiten des Polyethercarbonatpolyols erhalten aus der Terpolymerisation von Propylenoxid, Allylglycidylether und $CO_2$:

$$C'_{Carbonat}\,(Gew.\text{-}\%.) = [(I2/3)*44 / ((I1/3)*58 + (I2/3)*102 + (I5)*98)] \times 100\%$$

Der Anteil der über den Einbau des Maleinsäureanhydrids ($B_{Doppelbindung}$ in mol%) resultierenden Doppelbindungen in den Wiederholungseinheiten des Polyetherestercarbonatpolyols:

$$B_{Doppelbindung}\,(mol\%) = [(I6/2) / ((I1/3) + (I2/3) + (I6/2))] \times 100\%$$

Der Anteil an Kohlenstoff-Kohlenstoff Doppelbindungen ($B_{Doppelbindung}$ in Gew.-%.) in den Wiederholungseinheiten des Polyethercarbonatpolyols erhalten aus der Terpolymerisation von Propylenoxid, Allylglycidylether und $CO_2$:

$$B_{Doppelbindung}\,(Gew.\text{-}\%.) = [(I2/3)*44 / ((I1/3)*58 + (I2/3)*102 + (I5)*98)] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R'_{PO} = [(I4) / ((I1/3) + (I2/3) + (I3/3) + (I4) + (I6/2) + (I7/2))] \times 100\%$$

Der molare Anteil des nicht umgesetzten Maleinsäureanhydrids ($R_{MSA}$ in mol%) bezogen auf die Summe der bei der Aktivierung und der Copolymerisation eingesetzten Menge an Maleinsäureanhydrid, berechnet sich nach der Formel:

$$R_{MSA} = [(I7/2) / ((I1/3) + (I2/3) + (I3/3) + (I4) + (I6/2) + (I7/2))] \times 100\%$$

Das Zahlenmittel $M_n$ und das Gewichtsmittel $M_w$ des Molekulargewichts der eingesetzten Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Polyethercarbonatpolyol].

Der NCO-Index ist definiert als molares Verhältnis an Isocyanatgruppen und OH-Gruppen in der Reaktionsmischung.

Für die rheologische Bestimmung der Gel-Zeit wurde eine Probe des Polyethercarbonatpolyols mit einer äquimolaren Menge eines Polyisocyanates (Diisocyanat und/oder Triisocyanat) und Dibutylzinnlaurat (1 Gew.-%) versetzt. Die komplexen Moduli G' (Speichermodul) und G" (Verlustmodul) wurden in einer Oszillationsmessung bei 60°C und einer Frequenz von 1 Hz bestimmt, wobei eine Platte-Platte-Konfiguration mit einem Plattendurchmesser von 15 mm, einem Plattenabstand von 1 mm und einer 10 prozentigen Deformation verwendet wurden. Der Gel-Punkt wurde als der Zeitpunkt definiert, an dem Speichermodul (G') und Verlustmodul (G") gleich groß sind (G'/G"=1). Zur Bestimmung des Speichermoduls (G') nach 2 Stunden wurde der Wert des zu dieser Zeit erreichten Speichermoduls, gemessen in Pa, abgelesen.

Für die rheologische Bestimmung der Adhäsionsbruchenergie (Klebekraft) wurde eine Probe des Präpolymers auf der Messplatte des Rheometers aufgebracht. Die Reißkraft ($F_N$) und die Reißdehnung (d) wurden in einer Klebekraftsmessung bei 30°C bestimmt, wobei eine Platte-Platte-Konfiguration mit einem Plattendurchmesser von 15 mm und einem Plattenabstand von 0,8 mm verwendet wurden. Die Probe wurde zunächst mit einer Kompressionskraft von 10 N gepresst. Anschließend wurde die obere Platte mit einer Geschwindigkeit von -2,5 mm/s abgehoben und die Reißkraft ($F_N$) über die inkrementelle Distanzen $d_i$ bis zum Bruch der Probe bestimmt. Die Adhäsionsbruchenergie wurde gemäß der nachfolgenden Formel berechnet, wobei "r" der Radius der oberen Platte ist (r = 7,5 mm), und ist in N/mm angegeben.

$$E_{ad} = \Sigma_i(F_{N,i} \times d_i / \pi) / (r^2 \times \pi)$$

Die Infrarot (IR)-spektroskopischen Messungen erfolgten auf einem Bruker Alpha-P FT-IR-Spektrometer; die Messungen erfolgten in Reinsubstanz; angegeben ist die Wellenzahl des Maximums des Signales für die C=C-Streckschwingung.

Der Doppelbindungsgehalt der Präpolymere ergibt sich als der Quotient des angegebenen Doppelbindungsgehalts der eingesetzten Polyethercarbonatpolyole (angegeben in $C_2H_4$ Äquivalenten pro Masse Polyethercarbonatpolyol) bezogen auf die Gesamtmasse der eingesetzten Reaktanden (Polyethercarbonatpolyol, Isocyanatmischung, Katalysator) und ist in $C_2H_4$ Äquivalenten pro Masse Präpolymer angegeben.

Der $CO_2$-Gehalt der Präpolymere ergibt sich als der Quotient des $CO_2$-Gehalts der eingesetzten Polyethercarbonatpolyol bezogen auf die Gesamtmasse der eingesetzten Reaktanden (Polyethercarbonatpolyol, Isocyanatmischung B1 und B2, Katalysator).

Herstellung eines difunktionellen elektronenarme Doppelbindungen enthaltenden Polyethercarbonatpolyols (PEC-1)

In einem 970 ml Druckreaktor ausgestattet mit einem Gaseintragsrührer wurde eine Mischung aus DMC-Katalysator (70 mg) und PET-1 (80 g) vorgelegt und 30 min bei 130°C in einem partiellen Vakuum (50 mbar) unter Durchleiten von Argon durch die Reaktionsmischung gerührt. Nach Aufpressen von 15 bar $CO_2$, wobei ein leichter Temperaturabfall zu beobachten war, und Wiedererreichen einer Temperatur von 130°C wurden 80 g einer Monomermischung (11,0 Gew.-% Maleinsäureanhydrid [entsprechend 6,8 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 8,0 g der Monomermischung wurde ein zweites und drittes Mal wiederholt. Nach Abkühlen auf 100°C wurden weitere 246,0 g der Monomermischung (11,0 Gew.-% Maleinsäureanhydrid gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 1 h bei 100°C gerührt. Die Reaktion wurde durch Kühlung des Reaktors mit Eiswasser gestoppt.

Charakterisierung des erhaltenen Polyethercarbonatpolyols gemäß den in WO 2015032737 A1 genannten Methoden ergab eine OH-Zahl von 23,1 $mg_{KOH}$/g, einen $CO_2$-Gehalt von 16,79 Gew.-%, ein Molekulargewicht $M_n$ von 6157 g/mol, einen Polydispersionsindex (PDI) von 2,05 und einen Doppelbindungsanteil von 2,03 Gew.-%.

Herstellung eines difunktionellen elektronenreiche Doppelbindungen enthaltenden Polyethercarbonatpolyols (PEC-2)

In einem 970 ml Druckreaktor ausgestattet mit einem Gaseintragsrührer wurde eine Mischung aus DMC-Katalysator (48 mg) und PET-1 (80 g) vorgelegt und 30 min bei 130°C in einem partiellen Vakuum (50 mbar) unter Durchleiten von Argon durch die Reaktionsmischung gerührt. Nach Aufpressen von 15 bar $CO_2$, wobei ein leichter Temperaturabfall zu beobachten war, und Wiedererreichen einer Temperatur von 130°C wurden 8,0 g einer Monomermischung (16,7 Gew.-% Allylglycidylether [entsprechend 9,3 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 8,0 g der Monomermischung wurde ein zweites und drittes Mal wiederholt. Nach Abkühlen auf 100°C wurden weitere 136,0 g der Monomermischung (16,7 Gew.-% Allylglycidylether) über eine HPLC-Pumpe (1 ml/min) zudosiert, wobei der $CO_2$ Druck konstant auf 15 bar gehalten wurde. Anschließend wurde die Reaktionsmischung weitere 1 h bei 100°C gerührt. Die Reaktion wurde durch Kühlung des Reaktors mit Eiswasser gestoppt.

Charakterisierung des erhaltenen Polyethercarbonatpolyols gemäß den in WO 2015032737 A1 genannten Methoden ergab eine OH-Zahl von 36,8 $mg_{KOH}$/g, einen $CO_2$-Gehalt von 9,92 Gew.-%, ein Molekulargewicht $M_n$ von 3795 g/mol, einen PDI von 1,10 und einen Doppelbindungsanteil von 2,12 Gew.-%.

**Beispielgruppe A: Herstellung von Präpolymeren mit PEC-1**

**Beispiel A-1 (Vergleichsbeispiel): Herstellung eines Präpolymers unter Einsatz eines Polyethercarbonatpolyols (PEC-1) mit 2,03 Gew.-% elektronenarmen Doppelbindungen und TDI als Diisocyanat (durchschnittliche molare NCO-Funktionalität 2,00)**

In einem Aluminium-Becher wurden PEC-1 (2,0 g), TDI (72 mg) und DBTL (1 Gew.-%, 20,7 mg) vermischt. Anschließend wurde eine Probe der Mischung (0,4 g) für die Messung auf dem Rheometer eingesetzt und für drei Stunden auf 60 °C erhitzt.

Der NCO-Index betrug 1,00.

Die Gelzeit betrug 35 min.

Das Speichermodul G' nach 2 h betrug $5{,}65 \cdot 10^3$ Pa.

Die Adhäsionsbruchenergie betrug -0,16 N/mm.

Analyse der erhaltenen Probe über IR Spektroskopie zeigte das charakteristische Signal für Doppelbindungen bei 1645 $cm^{-1}$.

Der Doppelbindungsgehalt der erhaltenen Probe betrug 1,94 Gew.-%.

Der $CO_2$-Gehalt der erhaltenen Probe betrug 16,21 Gew.-%.

**Beispiel A-2 (Vergleichsbeispiel): Herstellung eines Präpolymers unter Einsatz eines Polyethercarbonatpolyols (PEC-1) mit 2,03 Gew.-% elektronenarmen Doppelbindungen und einer Mischung von TDI als Diisocyanat und HDI-Trimer als Triisocyanat in einem molaren Verhältnis von 93:7 (durchschnittliche molare NCO-Funktionalität 2,07)**

In einem Aluminium-Becher wurden PEC-1 (2,0 g), TDI (65 mg), HDI-Trimer (15 mg) und DBTL (1 Gew.-%, 20,6 mg) vermischt. Anschließend wurde eine Probe der Mischung (0,4 g) auf dem Rheometer eingesetzt und für drei Stunden auf 60°C erhitzt.

Der NCO-Index betrug 1,00.

Die Gelzeit betrug 17 min.

Das Speichermodul G' nach 2 h betrug $1{,}76 \cdot 10^3$ Pa.

Die Adhäsionsbruchenergie betrug -0,105 N/mm.

Analyse der erhaltenen Probe über IR Spektroskopie zeigte das charakteristische Signal für Doppelbindungen bei 1645 $cm^{-1}$.

Der Doppelbindungsgehalt der erhaltenen Probe betrug 1,93 Gew.-%.

Der $CO_2$-Gehalt der erhaltenen Probe betrug 16,15 Gew.-%.

**Beispiel A-3: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 87:13 (durchschnittliche molare NCO-Funktionalität 2,15)**

In einem Aluminium-Becher wurden PEC-1 (2,0 g), TDI (58 mg), HDI-Trimer (29 mg) und DBTL (20,6 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 15,6 min.

Das Speichermodul G' nach 2 h betrug $9{,}88 \cdot 10^3$ Pa.

Die Adhäsionsbruchenergie betrug -0,076 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,93 Gew.-%.

Der $CO_2$-Gehalt der erhaltenen Probe betrug 16,09 Gew.-%.

**Beispiel A-4: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 79:21 (durchschnittliche molare NCO-Funktionalität 2,23)**

In einem Aluminium-Becher wurden PEC-1 (2,0 g), TDI (50 mg), HDI-Trimer (44 mg) und DBTL (20,5 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 14,4 min.

Der Speichermodul G' nach 2 h betrug $8{,}15 \cdot 10^3$ Pa.

Die Adhäsionsbruchenergie betrug -0,076 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,92 Gew.-%.

Der $CO_2$-Gehalt der erhaltenen Probe betrug 16,03 Gew.-%.

**Beispiel A-5: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 71:29 (durchschnittliche molare NCO-Funktionalität 2,32)**

In einem Aluminium-Becher wurden PEC-1 (2,0 g), TDI (43 mg), HDI-Trimer (58 mg) und DBTL (20,4 mg, 1

Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 6,9 min.

Der Speichermodul G' nach 2 h betrug $4{,}83 \cdot 10^4$ Pa.

Die Adhäsionsbruchenergie betrug -0,075 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,91 Gew.-%.

Der $CO_2$-Gehalt der erhaltenen Probe betrug 16,21 Gew.-%.

**Beispiel A-6: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 62:38 (durchschnittliche molare NCO-Funktionalität 2,42)**

In einem Aluminium-Becher wurden PEC-1 (2,0 g), TDI (36 mg), HDI-Trimer (73mg) und DBTL (20,4 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 6,8 min.

Der Speichermodul G' nach 2 h betrug $5{,}83 \cdot 10^4$ Pa.

Die Adhäsionsbruchenergie betrug -0,073 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,91 Gew.-%.

Der $CO_2$-Gehalt der erhaltenen Probe betrug 15,92 Gew.-%.

**Beispiel A-7: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 52:48 (durchschnittliche molare NCO-Funktionalität 2,53)**

In einem Aluminium-Becher wurden PEC-1 (2,0 g), TDI (29 mg), HDI-Trimer (88 mg) und DBTL (20,3 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 5,9 min.

Der Speichermodul G' nach 2 h betrug $4{,}29 \cdot 10^4$ Pa.

Die Adhäsionsbruchenergie betrug -0,041 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,90 Gew.-%.

Der $CO_2$-Gehalt der erhaltenen Probe betrug 15,87 Gew.-%.

**Beispiel A-8: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 41:59 (durchschnittliche molare NCO-Funktionalität 2,64)**

In einem Aluminium-Becher wurden PEC-1 (2,0 g), TDI (22 mg), HDI-Trimer (102 mg) und DBTL (20,2 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 4,8 min.

Der Speichermodul G' nach 2 h betrug $1{,}21 \cdot 10^5$ Pa.

Die Adhäsionsbruchenergie betrug -0,036 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,89 Gew.-%.

Der $CO_2$-Gehalt der erhaltenen Probe betrug 15,81 Gew.-%.

**Beispiel A-9: Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 28:72 (durchschnittliche molare NCO-Funktionalität 2,79)**

In einem Aluminium-Becher wurden PEC-1 (2,0 g), TDI (14 mg), HDI-Trimer (117 mg) und DBTL (20,1 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 5,4 min.

Der Speichermodul G' nach 2 h betrug $1{,}19 \cdot 10^5$ Pa.

Die Adhäsionsbruchenergie betrug -0,019 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,89 Gew.-%.

Der $CO_2$-Gehalt der erhaltenen Probe betrug 15,76 Gew.-%.

**Beispiel A-10 (Vergleichsbeispiel): Herstellung eines Präpolymers unter Einsatz eines Polyethercarbonatpolyols (PEC-1) mit 2,03 Gew.-% elektronenarmen Doppelbindungen und einer Mischung aus TDI als Diisocyanat und HDI-Trimer als Triisocyanat in einem molaren Verhältnis von 15:85 (durchschnittliche molare NCO-Funktionalität 2,94)**

In einem Aluminium-Becher wurden PEC-1 (2,0 g), TDI (7 mg), HDI-Trimer (131 mg) und DBTL (20,1 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 5,00 min.

Der Speichermodul G' nach 2 h betrug $1{,}76 \cdot 10^5$ Pa.

Die Adhäsionsbruchenergie betrug -0,009 N/mm.

Analyse über IR Spektroskopie zeigte das charakteristische Signal für Doppelbindungen bei 1645 $cm^{-1}$.

Der Doppelbindungsgehalt der erhaltenen Probe betrug 1,88 Gew.-%.

Der $CO_2$-Gehalt der erhaltenen Probe betrug 15,70 Gew.-%.

**Beispiel A-11 (Vergleichsbeispiel): Herstellung eines Präpolymers unter Einsatz eines Polyethercarbonatpolyols (PEC-1) mit 2,03 Gew.-% elektronenarmen Doppelbindungen und HDI-Trimer als Triisocyanat (durchschnittliche molare NCO-Funktionalität 3,10)**

In einem Aluminium-Becher wurden PEC-1 (2,0 g), HDI-Trimer (146 mg) und DBTL (20,0 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug < 1 min.

Der Speichermodul G' nach 2 h betrug $1{,}93 \cdot 10^5$ Pa.

Die Adhäsionsbruchenergie lag unterhalb der Messgrenze.

Analyse über IR Spektroskopie zeigte das charakteristische Signal für Doppelbindungen bei 1645 $cm^{-1}$.

Der Doppelbindungsgehalt der erhaltenen Probe betrug 1,87 Gew.-%.

Der $CO_2$-Gehalt der erhaltenen Probe betrug 15,65 Gew.-%.

*Vergleich*

Die nachfolgende Tabelle 1 zeigt einen Vergleich der unter Verwendung einer Mischung aus Diisocyanat und Triisocyanat mit einer Durchschnittsfunktionalität von ≥ 2,15 bis ≤ 2,9 erhaltenen Ergebnisse (Beispiele A-3 bis A-9) im Vergleich zu den unter Verwendung einer Mischung aus Diisocyanat und Triisocyanat mit einer Durchschnittsfunktionalität von ≤ 2,11 oder eines Diisocyanats erhaltenen Ergebnissen (Vergleichsbeispiele A-1 und A-2) und im Vergleich zu den bei Verwendung einer Mischung aus Diisocyanat und Triisocyanat mit einer Durchschnittsfunktionalität von ≥ 2,94 oder nur eines Triisocyanats erhaltenen Ergebnissen (Vergleichsbeispiele A-10 und A-11).

**Tabelle 1**

| Beispiel | Molares Verhältnis | | | durchschnittliche molare NCO-Funktionalität von B1 und B2 | Gel-Punkt | Adhäsions bruch energie | G' nach 2 h |
|---|---|---|---|---|---|---|---|
| | PEC-I (A) | TDI (B1) | HDI Trimer (B2) | [-] | [min] | [N/mm] | [Pa] |
| A-1 (Vgl.) | 10 | 10 | 0 | 2,00 | 35,0 | -0,160 | $5{,}65\cdot10^{2}$ |
| A-2 (Vgl.) | 10 | 9 | 1 | 2,07 | 17,0 | -0,105 | $1{,}76\cdot10^{3}$ |
| A-3 | 10 | 8 | 2 | 2,15 | 15,6 | -0,076 | $9{,}88\cdot10^{3}$ |
| A-4 | 10 | 7 | 3 | 2,23 | 14,4 | -0,076 | $8{,}15\cdot10^{3}$ |
| A-5 | 10 | 6 | 4 | 2,32 | 6,9 | -0,075 | $4{,}83\cdot10^{4}$ |
| A-6 | 10 | 5 | 5 | 2,42 | 6,8 | -0,073 | $5{,}83\cdot10^{4}$ |
| A-7 | 10 | 4 | 6 | 2,53 | 5,9 | -0,041 | $4{,}29\cdot10^{4}$ |
| A-8 | 10 | 3 | 7 | 2,64 | 4,8 | -0,036 | $1{,}21\cdot10^{5}$ |
| A-9 | 10 | 2 | 8 | 2,79 | 5,4 | -0,019 | $1{,}19\cdot10^{5}$ |
| A-10 (Vgl.) | 10 | 1 | 9 | 2,94 | 5,0 | -0,009 | $1{,}76\cdot10^{5}$ |
| A-11 (Vgl.) | 10 | 0 | 10 | 3,10 | < 1 | keine | $1{,}93\cdot10^{5}$ |
| Vgl.: Vergleichsbeispiel; F: Funktionalität; I2: Isocyanat mit Funktionalität 2,00; I3: Isocyanat mit Funktionalität 3,10 | | | | | | | |

Tabelle 1 zeigt, dass unter Verwendung einer erfindungsgemäßen Mischung aus Diisocyanat und Triisocyanat mit einer durchschnittlichen Funktionalität der NCO-Komponente im erfindungsgemäß vorgesehenen Bereich (Durchschnittsfunktionalität von ≥ 2,15 bis ≤ 2,90) eine Präpolymer-Elastomer-Vorstufe mit geringer Adhäsionsbruchenergie (geringer Klebekraft) erhalten wird (Beispiele A-3 bis A-9). Im Gegensatz dazu wird bei Unterschreitung einer durchschnittlichen NCO-Funktionalität von 2,15 ein stark anhaftendes (stark klebriges) Gel mit hoher Adhäsionsbruchenergie erhalten (Vergleichsbeispiele A-1 bis A-2) und bei Überschreitung einer durchschnittlichen NCO-Funktionalität von 2,9 ein Material mit einem hohen Speichermodul erzeugt (Vergleichsbeispiele A-10 bis A-11). Insbesondere wird bei Verwendung nur eines Diisocyanats ein Gel mit hoher Adhäsionsbruchenergie (hoher Klebekraft) erhalten (Vergleichsbeispiel A-1) und bei Verwendung nur eines Triisocyanats ein Polyurethanpolymer mit einem hohen Speichermodul erhalten (Vergleichsbeispiel A-11).

**Beispielgruppe B: Herstellung von Präpolymeren mit PEC-2**

**Beispiel B-1 (Vergleichsbeispiel): Herstellung eines Präpolymers unter Einsatz eines Polyethercarbonatpolyols (PEC-2) mit 2,12 Gew.-% elektronenreicheren Doppelbindungen und TDI als Diisocyanat (durchschnittliche molare NCO-Funktionalität 2,00)**

In einem Aluminium-Becher wurden PEC-2 (1,3 g), TDI (72 mg) und DBTL (1 Gew.-%, 20,7 mg) vermischt. Anschließend eine Probe der Mischung (0,4 g) für die Messung auf dem Rheometer eingesetzt und für drei Stunden auf 60 °C erhitzt.

Der NCO-Index betrug 1,00.

Der Gel-Punkt wurde innerhalb der Messdauer nicht erreicht.

Das Speichermodul G' nach 2 h betrug 12,7 Pa.

Die Adhäsionsbruchenergie lag unterhalb der Messgrenze.

Analyse der erhaltenen Probe über IR Spektroskopie zeigte das charakteristische Signal für Doppelbindungen bei 1645 $cm^{-1}$.

Der Doppelbindungsgehalt der erhaltenen Probe betrug 2,03 Gew.-%.

Der $CO_2$-Gehalt der erhaltenen Probe betrug 9,38 Gew.-%.

**Beispiel B-2: Herstellung eines Präpolymers unter Einsatz eines Polyethercarbonatpolyols (PEC-2) mit 2,12 Gew.-% elektronenreicheren Doppelbindungen und einer Mischung von TDI als Diisocyanat und HDI-Trimer als Triisocyanat in einem molaren Verhältnis von 41:59 (durchschnittliche molare NCO-Funktionalität 2,64)**

In einem Aluminium-Becher wurden PEC-2 (1,3 g), TDI (22 mg), HDI-Trimer (102 mg) und DBTL (1 Gew.-%, 20,6 mg) vermischt. Anschließend wurde eine Probe der Mischung (0,4 g) auf dem Rheometer eingesetzt und für drei Stunden auf 60°C erhitzt.

Der NCO-Index betrug 1,00.

Die Gelzeit betrug 25,3 min.

Das Speichermodul G' nach 2 h betrug $1{,}3 \cdot 10^3$ Pa.

Die Adhäsionsbruchenergie betrug -0,104 N/mm.

Analyse der erhaltenen Probe über IR Spektroskopie zeigte das charakteristische Signal für Doppelbindungen bei 1645 $cm^{-1}$.

Der Doppelbindungsgehalt der erhaltenen Probe betrug 2,02 Gew.-%.

Der $CO_2$-Gehalt der erhaltenen Probe betrug 9,23 Gew.-%.

**Beispiel B-3: Herstellung eines Präpolymers unter Einsatz eines Polyethercarbonatpolyols (PEC-2) mit 2,12 Gew.-% elektronenreicheren Doppelbindungen und einer Mischung von TDI als Diisocyanat und HDI-Trimer als Triisocyanat in einem molaren Verhältnis von 28:72 (durchschnittliche molare NCO-Funktionalität 2,79)**

In einem Aluminium-Becher wurden PEC-2 (1,3 g), TDI (14 mg), HDI-Trimer (117 mg) und DBTL (1 Gew.-%, 20,6 mg) vermischt. Anschließend wurde eine Probe der Mischung (0,4 g) auf dem Rheometer eingesetzt und für drei Stunden auf 60°C erhitzt.

Der NCO-Index betrug 1,00.

Die Gelzeit betrug 4,5 min.

Das Speichermodul G' nach 2 h betrug $1{,}6 \cdot 10^3$ Pa.

Die Adhäsionsbruchenergie betrug -0,005 N/mm.

Analyse der erhaltenen Probe über IR Spektroskopie zeigte das charakteristische Signal für Doppelbindungen bei 1645 $cm^{-1}$.

Der Doppelbindungsgehalt der erhaltenen Probe betrug 2,01 Gew.-%.

Der $CO_2$-Gehalt der erhaltenen Probe betrug 9,18 Gew.-%.

**Beispiel B-4 (Vergleichsbeispiel): Herstellung eines Präpolymers unter Einsatz eines Polyethercarbonatpolyols (PEC-2) mit 2,12 Gew.-% elektronenreicheren Doppelbindungen und HDI-Trimer als Triisocyanat (durchschnittliche molare NCO-Funktionalität 3,10)**

In einem Aluminium-Becher wurden PEC-2 (1,3 g), HDI-Trimer (146 mg) und DBTL (20,0 mg, 1 Gew.-%) vermischt. Anschließend wurde eine Probe der Mischung (0,4 g) auf dem Rheometer eingesetzt und für drei Stunden auf 60 °C erhitzt.

Der NCO-Index betrug 1,00.

Die Gelzeit betrug 2,3 min.

Das Speichermodul G' nach 2 h betrug $1{,}4 \cdot 10^5$ Pa.

Die Adhäsionsbruchenergie lag unterhalb der Messgrenze.

Analyse der erhaltenen Probe über IR Spektroskopie zeigte das charakteristische Signal für Doppelbindungen bei 1645 $cm^{-1}$.

Der Doppelbindungsgehalt der erhaltenen Probe betrug 1,96 Gew.-%.

Der $CO_2$-Gehalt der erhaltenen Probe betrug 9,13 Gew.-%.

*Vergleich*

Die nachfolgende Tabelle 2 zeigt einen Vergleich der unter Verwendung einer Mischung aus Diisocyanat und Triisocyanat mit einer Durchschnittsfunktionalität von $\geq 2{,}15$ bis $\leq 2{,}90$ erhaltenen Ergebnissen (Beispiele B-2 bis B-3) im Vergleich zu den unter Verwendung eines Diisocyanats erhaltenen Ergebnissen (Vergleichsbeispiel B-1) und den bei Verwendung nur eines Triisocyanats erhaltenen Ergebnissen (Vergleichsbeispiel B-4).

**Tabelle 2**

| Beispiel | Molares Verhältnis | | | durchschnittliche molare NCO-Funktionalität von B1 und B2 | Gel-Punkt | Adhäsionsbruchenergie | G' nach 2 h |
|---|---|---|---|---|---|---|---|
| | PEC -II (A) | TDI (B1) | HDI-Trimer (B2) | [-] | [min] | [N/mm] | [Pa] |
| B-1 (Vgl.) | 10 | 10 | 0 | 2,00 | >120 | - | 12,7 |
| B-2 | 10 | 4,1 | 5,9 | 2,64 | 25,3 | -0,104 | $1{,}3 \cdot 10^3$ |
| B-3 | 10 | 2,8 | 7,2 | 2,79 | 4,5 | -0,005 | $1{,}6 \cdot 10^3$ |
| B-4 (Vgl.) | 10 | 0 | 100 | 3,10 | 2,3 | keine | $1{,}4 \cdot 10^5$ |
| Vgl.: Vergleichsbeispiel; F: Funktionalität; I2: Isocyanat mit Funktionalität 2; I3: Isocyanat mit Funktionalität 3 | | | | | | | |

Tabelle 2 zeigt, dass unter Verwendung einer erfindungsgemäßen Mischung aus Diisocyanat und Triisocyanat mit einer durchschnittlichen Funktionalität der NCO-Komponente im erfindungsgemäß vorgesehenen Bereich (Durchschnittsfunktionalität $\geq 2{,}15$ bis $\leq 2{,}9$) eine Präpolymer-Elastomer-Vorstufe mit geringer Adhäsionsbruchenergie (geringer Klebekraft) erhalten wird (Beispiele B-2 bis B-3). Im Gegensatz dazu wird bei Verwendung nur eines Diisocyanats ein Flüssigkeit erhalten, die auf den gängigen Maschinen nicht verarbeitet werden kann (Vergleichsbeispiel B-1) und bei Verwendung nur eines Triisocyanats ein Polyurethanpolymer mit einem hohen Speichermodul erhalten (Vergleichsbeispiel B-4).

## Patentansprüche

1. Verfahren zur Herstellung eines Kohlenstoff-Kohlenstoff Mehrfachbindungen enthaltenden Präpolymers, bevorzugt eines Kohlenstoff-Kohlenstoff Doppelbindungen enthaltenden Präpolymers, wobei eine Polyolkomponente A mit einer Isocyanatgruppen-haltigen Komponente B umgesetzt wird und die Polyolkomponente ein Kohlenstoff-Kohlenstoff Mehrfachbindungen enthaltendes Polyethercarbonatpolyol, bevorzugt ein Kohlenstoff-Kohlenstoff Doppelbindungen enthaltendes Polyethercarbonatpolyol umfasst,
**dadurch gekennzeichnet, dass**
die durchschnittliche molare NCO-Funktionalität der Isocyanatgruppen-haltigen Komponente B von 2,15 bis 2,90, bevorzugt von 2,40 bis 2,80 beträgt, und wobei der Gehalt an Kohlenstoff-Kohlenstoff Mehrfachbindungen, bevorzugt Kohlenstoff-Kohlenstoff Doppelbindungen, im Polyethercarbonatpolyol von 0,5 Gew.-% bis 17,0 Gew.-% beträgt.

2. Verfahren gemäß Anspruch 1, wobei das Kohlenstoff-Kohlenstoff Mehrfachbindungen enthaltende Polyethercarbonatpolyol, bevorzugt das Kohlenstoff-Kohlenstoff Doppelbindungen enthaltende Polyethercarbonatpolyol, erhältlich ist durch Anlagerung eines Alkylenoxids, mindestens eines Kohlenstoff-Kohlenstoff Mehrfachbindungshaltigen Monomers und $CO_2$ an eine H-funktionelle Starterverbindung in Gegenwart eines Doppelmetallcyanidkatalysators.

3. Verfahren gemäß Anspruch 1 oder 2, wobei das Kohlenstoff-Kohlenstoff Mehrfachbindungen enthaltende Polyethercarbonatpolyol einen $CO_2$ Anteil von 3 Gew.-% bis 50 Gew.-% bevorzugt von 5 Gew.-% bis 25 Gew.-% aufweist.

4. Verfahren gemäß einem der Ansprüche 2, wobei das mindestens eine Kohlenstoff-Kohlenstoff Mehrfachbindungshaltige Monomer ausgewählt wird aus mindestenes einem der Monomere aus einer oder mehrerer der Gruppen bestehend aus

   (a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren, teilweise epoxidierte Fette und Öle und/oder deren Mischungen
   (b) Alkylenoxid mit Doppelbindung der allgemeinen Formel (IX) ist:

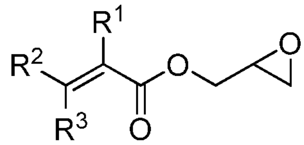

(IX)

wobei $R_1$ bis $R_3$ unabhängig voneinander H, Halogen, substituierte oder nicht-substituierte C1-C22-Alkyl, substituierte oder nicht-substituierte C6-C12 Aryl sind

(c) cyclisches Anhydrid der Formel (X), (XI) oder (XII) entspricht:

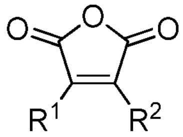

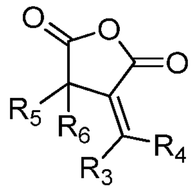

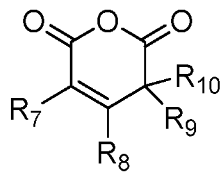

,

(X) (XI) (XII)

wobei $R_1$ bis $R_{10}$ unabhängig voneinander H, Halogen, substituierte oder nicht-substituierte C1-C22-Alkyl, substituierte oder nicht-substituierte C6-C12 Aryl sind,

(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenyl-bernsteinsäureanhydrid und Octadecenylbernsteinsäureanhydrid und

(e) Alkylenoxide mit Kohlenstoff-Kohlenstoff Dreifachbindung enthaltenden Substituenten.

**5.** Verfahren gemäß Anspruch 4, wobei das mindestens eine mindestens eine Kohlenstoff-Kohlenstoff Mehrfachbindungen enhaltende Monomere ausgewählt wird aus einer oder mehrerer der Gruppen bestehend aus

(a) Allylglycidylether, Vinylcyclohexenoxid und Limonenoxid
(b) Glycidylacrylat und Glycidylmethacrylat,
(c) Maleinsäureanhydrid und Itaconsäureanhydrid,
(d) 4-Cyclohexen-1,2-disäureanhydrid und 5,6-Norbornen-2,3-disäureanhydrid und
(e) Glycidylpropargylether.

**6.** Verfahren gemäß einem der Ansprüche 1 bis 5, wobei als Isocyanatgruppen-haltige Komponente B mindestens 2 Polyisocyanate ausgewählt aus der Gruppe bestehend aus HDI, MDI, TDI deren Trimerisierungs- oder höheren Oligomerisierungsprodukte und deren Addukte enthält.

**7.** Verfahren gemäß Anspruch 8, wobei die Isocyanatgruppen-haltige Komponente B mindestens ein Polyisocyanat B1 mit einer durchschnittlichen molaren NCO-Funktionalität von 2,0 bis 2,2 und mindestens ein Polyisocyanat B2 mit einer durchschnittlichen molaren NCO-Funktionalität von 2,8 bis 3,2 umfasst.

**8.** Verfahren gemäß Anspruch 9, wobei die Polyisocyanate B1 und B2 eine Mischung aus einem Diisocyanat-Monomer und einem Diisocyanat-Trimer bestehen.

**9.** Verfahren gemäß Anspruch 1 bis 8, wobei der NCO-Index bei der Herstellung des Präpolymeren 0,95 bis 1,20, beträgt.

**10.** Kohlenstoff-Kohlenstoff-Mehrfachbindungen enthaltendes Präpolymer, bevorzugt Kohlenstoff-Kohlenstoff-Doppelbindungen enthaltendes Präpolymer, erhältlich durch ein Verfahren gemäß einem der Ansprüche 1 bis 9.

**11.** Präpolymer gemäß Anspruch 10 mit einem Gehalt an Kohlenstoff-Kohlenstoff Mehrfachbindungen 0,5 Gew.-% bis von 15,0 Gew.-%, bevorzugt von 1,0 Gew.-% bis 6,0 Gew.-%, besonders bevorzugt von 1,5 Gew.-% bis 3,0 Gew.-%.

**12.** Verfahren zur Herstellung eines Elastomers, umfassend die Schritte:

a-2) Bereitstellen eines nach einem Verfahren gemäß Anspruch 1 bis 9 hergestellten Präpolymers
b-2) Vernetzen des Präpolymers

**13.** Elastomer, erhältlich durch ein Verfahren gemäß Anspruch 12.

## Claims

**1.** Process for preparing a prepolymer containing carbon-carbon multiple bonds, preferably a prepolymer containing carbon-carbon double bonds, where a polyol component A is reacted with an isocyanate-containing component B and the polyol component comprises a polyethercarbonate polyol containing carbon-carbon multiple bonds, preferably a polyethercarbonate polyol containing carbon-carbon double bonds,
**characterized in that**
the average molar NCO functionality of the isocyanate-containing component B is from 2.15 to 2.90, preferably from 2.40 to 2.80, and where the content of carbon-carbon multiple bonds, preferably carbon-carbon double bonds, in the polyethercarbonate polyol is from 0.5% by weight to 17.0% by weight.

**2.** Process according to Claim 1, wherein the polyethercarbonate polyol containing carbon-carbon multiple bonds, preferably the polyethercarbonate polyol containing carbon-carbon double bonds, is obtainable by addition of an alkylene oxide, at least one monomer containing carbon-carbon multiple bonds and $CO_2$ onto an H-functional starter compound in the presence of a double metal cyanide catalyst.

**3.** Process according to Claim 1 or 2, wherein the polyethercarbonate polyol containing carbon-carbon multiple bonds has a $CO_2$ content of 3% by weight to 50% by weight, preferably of 5% by weight to 25% by weight.

**4.** Process according to any of Claims 2, wherein the monomer containing at least one carbon-carbon multiple bond is selected from at least one of the monomers from one or more of the groups consisting of

(a) allyl glycidyl ether, vinylcyclohexene oxide, cyclooctadiene monoepoxide, cyclododecatriene monoepoxide, butadiene monoepoxide, isoprene monoepoxide, limonene oxide, 1,4-divinylbenzene monoepoxide, 1,3-divinylbenzene monoepoxide, glycidyl esters of unsaturated fatty acids, partly epoxidized fats and oils and/or mixtures thereof
(b) alkylene oxide with double bond of the general formula (IX):

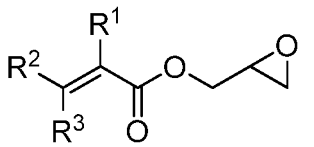
(IX)

where $R_1$ to $R_3$ are independently H, halogen, substituted or unsubstituted C1-C22 alkyl or substituted or unsubstituted C6-C12 aryl,
(c) cyclic anhydride conforming to the formula (X), (XI) or (XII):

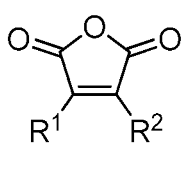
(X)

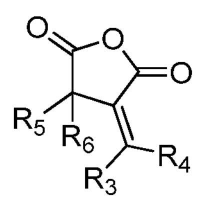
(XI)

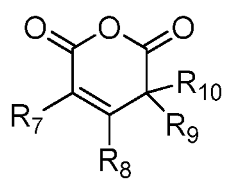
(XII)

where $R_1$ to $R_{10}$ are independently H, halogen, substituted or unsubstituted C1-C22 alkyl or substituted or unsubstituted C6-C12 aryl,
(d) 4-cyclohexene-1,2-dioic anhydride, 4-methyl-4-cyclohexene-1,2-dioic anhydride, 5,6-norbornene-2,3-dioic anhydride, allyl-5,6-norbornene-2,3-dioic anhydride, dodecenyl-succinic anhydride, tetradecenylsuccinic anhydride, hexadecenylsuccinic anhydride and octadecenylsuccinic anhydride

and
(e) alkylene oxides with substituents having carbon-carbon triple bonds.

**5.** Process according to Claim 4, wherein the at least one monomer containing at least one carbon-carbon multiple bond is selected from one or more of the groups consisting of

(a) allyl glycidyl ether, vinylcyclohexene oxide and limonene oxide,
(b) glycidyl acrylate and glycidyl methacrylate,
(c) maleic anhydride and itaconic anhydride,
(d) 4-cyclohexene-1,2-dioic anhydride and 5,6-norbornene-2,3-dioic anhydride
and
(e) glycidyl propargyl ether.

**6.** Process according to any of Claims 1 to 5, wherein the isocyanate-containing component B comprises at least 2 polyisocyanates selected from the group consisting of HDI, MDI, TDI, the trimerization or higher oligomerization products thereof and adducts thereof.

**7.** Process according to Claim 8, wherein the isocyanate-containing component B comprises at least one polyisocyanate B1 having an average molar NCO functionality of 2.0 to 2.2 and at least one polyisocyanate B2 having an average molar NCO functionality of 2.8 to 3.2.

**8.** Process according to Claim 9, wherein the polyisocyanates B1 and B2 consist of a mixture of a diisocyanate monomer and a diisocyanate trimer.

**9.** Process according to Claims 1 to 8, wherein the NCO index in the preparation of the prepolymer is 0.95 to 1.20.

**10.** Prepolymer containing carbon-carbon multiple bonds, preferably a prepolymer containing carbon-carbon double bonds, obtainable by a process according to any of Claims 1 to 9.

**11.** Prepolymer according to Claim 10 having a content of carbon-carbon multiple bonds of 0.5% by weight of to 15.0% by weight, preferably of 1.0% by weight to 6.0% by weight, more preferably of 1.5% by weight to 3.0% by weight.

**12.** Process for producing an elastomer, comprising the steps of:

a-2) providing a prepolymer prepared by a process according to Claims 1 to 9
b-2) crosslinking the prepolymer.

**13.** Elastomer obtainable by a process according to Claim 12.

**Revendications**

**1.** Procédé de fabrication d’un prépolymère contenant des liaisons multiples carbone-carbone, de préférence d’un prépolymère contenant des doubles liaisons carbone-carbone, dans lequel un composant polyol A est mis en réaction avec un composant contenant des groupes isocyanate B, et le composant polyol comprend un polyéther-carbonate-polyol contenant des liaisons multiples carbone-carbone, de préférence un polyéther-carbonate-polyol contenant des doubles liaisons carbone-carbone,
**caractérisé en ce que**
la fonctionnalité NCO molaire moyenne du composant contenant des groupes isocyanate B est de 2,15 à 2,90, de préférence de 2,40 à 2,80, et dans lequel la teneur en liaisons multiples carbone-carbone, de préférence en doubles liaisons carbone-carbone, dans le polyéther-carbonate-polyol est de 0,5 % en poids à 17,0 % en poids.

**2.** Procédé selon la revendication 1, dans lequel le polyéther-carbonate-polyol contenant des liaisons multiples carbone-carbone, de préférence le polyéther-carbonate-polyol contenant des doubles liaisons carbone-carbone, peut être obtenu par addition d’un oxyde d’alkylène, d’au moins un monomère contenant des liaisons multiples carbone-carbone et de $CO_2$ sur un composé de départ à fonction H en présence d’un catalyseur de cyanure de deux métaux.

**3.** Procédé selon la revendication 1 ou 2, dans lequel le polyéther-carbonate-polyol contenant des liaisons multiples

carbone-carbone présente une proportion de $CO_2$ de 3 % en poids à 50 % en poids, de préférence de 5 % en poids à 25 % en poids.

4. Procédé selon l'une quelconque des revendications 2, dans lequel ledit au moins un monomère contenant des liaisons multiples carbone-carbone est choisi parmi au moins un des monomères d'un ou de plusieurs des groupes constitués par :

(a) l'éther allylglycidylique, l'oxyde de vinylcyclohexène, le monoépoxyde de cyclooctadiène, le monoépoxyde de cyclododécatriène, le monoépoxyde de butadiène, le monoépoxyde d'isoprène, l'oxyde de limonène, le monoépoxyde de 1,4-divinylbenzène, le monoépoxyde de 1,3-divinylbenzène, les esters glycidyliques d'acides gras insaturés, les graisses et les huiles partiellement époxydées et/ou leurs mélanges,
(b) l'oxyde d'alkylène contenant une double liaison est de la formule générale (IX) :

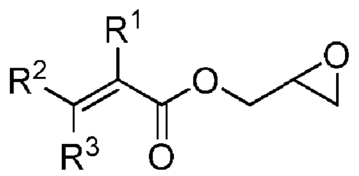
(IX)

dans laquelle $R_1$ à $R_3$ représentent indépendamment les uns des autres H, halogène, alkyle en C1-C22 substitué ou non substitué, aryle en C6-C12 substitué ou non substitué,
(c) l'anhydride cyclique correspond à la formule (X), (XI) ou (XII) :

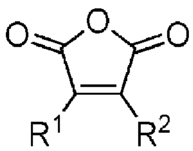
(X)

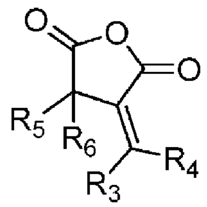
(XI)

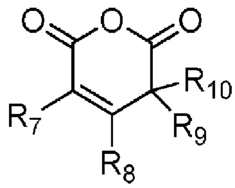
(XII)

dans lesquelles $R_1$ à $R_{10}$ représentent indépendamment les uns des autres H, halogène, alkyle en C1-C22 substitué ou non substitué, aryle en C6-C12 substitué ou non substitué,
(d) l'anhydride de l'acide 4-cyclohexène-1,2-dioïque, l'anhydride de l'acide 4-méthyl-4-cyclohexène-1,2-dioïque, l'anhydride de l'acide 5,6-norbornène-2,3-dioïque, l'anhydride de l'acide allyl-5,6-norbornène-2,3-dioïque, l'anhydride de l'acide dodécénylsuccinique, l'anhydride de l'acide tétradécénylsuccinique, l'anhydride de l'acide hexadécénylsuccinique et l'anhydride de l'acide octadécénylsuccinique,
et
(e) les oxydes d'alkylène contenant des substituants contenant une triple liaison carbone-carbone.

5. Procédé selon la revendication 4, dans lequel ledit au moins un monomère contenant au moins une liaison multiple carbone-carbone est choisi parmi un ou plusieurs des groupes constitués par :

(a) l'éther allylglycidylique, l'oxyde de vinylcyclohexène et l'oxyde de limonène,
(b) l'acrylate de glycidyle et le méthacrylate de glycidyle,
(c) l'anhydride de l'acide maléique et l'anhydride de l'acide itaconique,
(d) l'anhydride de l'acide 4-cyclohexène-1,2-dioïque et l'anhydride de l'acide 5,6-norbornène-2,3-dioïque,
et
(e) l'éther glycidylpropargylique.

6. Procédé selon l'une quelconque des revendications 1 à 5, dans lequel au moins 2 polyisocyanates choisis dans le groupe constitué par l'HDI, le MDI, le TDI, leurs produits de trimérisation ou d'oligomérisation supérieurs et leurs adduits sont contenus en tant que composant contenant des groupes isocyanate B.

7. Procédé selon la revendication 8, dans lequel le composant contenant des groupes isocyanate B comprend au

moins un polyisocyanate B1 ayant une fonctionnalité NCO molaire moyenne de 2,0 à 2,2 et au moins un polyisocyanate B2 ayant une fonctionnalité NCO molaire moyenne de 2,8 à 3,2.

**8.** Procédé selon la revendication 9, dans lequel les polyisocyanates B1 et B2 sont constitués par un mélange d'un monomère diisocynate et d'un trimère diisocyanate.

**9.** Procédé selon les revendications 1 à 8, dans lequel l'indice NCO lors de la fabrication du prépolymère est de 0,95 à 1,20.

**10.** Prépolymère contenant des liaisons multiples carbone-carbone, de préférence prépolymère contenant des doubles liaisons carbone-carbone, pouvant être obtenu par un procédé selon l'une quelconque des revendications 1 à 9.

**11.** Prépolymère selon la revendication 10 ayant une teneur en liaisons multiples carbone-carbone de 0,5 % en poids à 15,0 % en poids, de préférence de 1,0 % en poids à 6,0 % en poids, de manière particulièrement préférée de 1,5 % en poids à 3,0 % en poids.

**12.** Procédé de fabrication d'un élastomère, comprenant les étapes suivantes :

a-2) la préparation d'un prépolymère fabriqué par un procédé selon les revendications 1 à 9,
b-2) la réticulation du prépolymère.

**13.** Élastomère, pouvant être obtenu par un procédé selon la revendication 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2845872 A1
- WO 2014060329 A1
- WO 2015032645 A1
- WO 2015032737 A1
- WO 2015000903 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- EP 1359177 A
- WO 0180994 A1

### In der Beschreibung aufgeführte Nicht-Patentliteratur

- **INOUE et al.** Copolymerization of Carbon Dioxide and Epoxide with Organometallic Compounds. *Die Makromolekulare Chemie,* 1969, vol. 130, 210-220
- *Chemical Communications,* 2011, vol. 47, 141-163